(19) **Europäisches Patentamt / European Patent Office / Office européen des brevets**

(11) **EP 4 699 464 A2**

(12) **EUROPEAN PATENT APPLICATION**

(43) Date of publication:
**25.02.2026 Bulletin 2026/09**

(51) International Patent Classification (IPC):
***A24F 40/10*** (2020.01)

(21) Application number: **25201459.2**

(22) Date of filing: **13.06.2024**

(52) Cooperative Patent Classification (CPC):
**A24F 40/51; A24F 40/10; A24F 40/42; A24F 40/53; A24F 40/60; G01F 23/263;** A24F 40/20; A24F 40/30

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.06.2023 KR 20230078216**
**10.08.2023 KR 20230105100**

(62) Document number(s) of the earlier application(s) in accordance with Art. 76 EPC:
**24826190.1 / 4 696 176**

(71) Applicant: **KT&G Corporation**
**Daedeok-gu**
**Daejeon 34337 (KR)**

(72) Inventors:
- **JUNG, Hyung Jin**
  **Seoul (KR)**
- **KIM, Tae Hun**
  **Yongin-si (Gyeonggi-do) (KR)**
- **PARK, Ju Eon**
  **Seongnam-si (Gyeonggi-do) (KR)**
- **SHIN, Youn Ji**
  **Seoul (KR)**
- **LIM, Hun Il**
  **Seoul (KR)**

(74) Representative: **AWA Sweden AB**
**Matrosgatan 1**
**Box 5117**
**200 71 Malmö (SE)**

Remarks:
This application was filed on 10-11-2025 as a divisional application to the application mentioned under INID code 62.

(54) **AEROSOL-GENERATING DEVICE AND METHOD FOR CONTROLLING AEROSOL-GENERATING DEVICE**

(57)    Provided is an aerosol generating device including a detachable cartridge including a liquid storing portion storing an aerosol generating material and a heater configured to evaporate the aerosol generating material, an electrode member disposed on one surface of a main body to face one surface of the cartridge, a capacitive sensor configured to apply a certain measurement signal to the electrode member and to receive a sensing signal received from the electrode member, and a processor configured to calculate a capacitance value based on the sensing signal received from the capacitive sensor and to calculate a remaining amount of the aerosol generating material stored in the liquid storing portion, based on the calculated capacitance value and a preset gain value.

EP 4 699 464 A2

## Description

[Technical Field]

The disclosure relates to an aerosol generating device and a controlling method of an aerosol generating device.

[Background Art]

Recently, the demand for alternative methods to overcome the shortcomings of general cigarettes has increased. For example, there is an increasing demand for a system for generating aerosols by heating an aerosol generating material or cigarettes by using an aerosol generating device, rather than by burning cigarettes.

An aerosol generating device can generate aerosols by heating a liquid-state aerosol generating material stored in a cartridge. In order for the aerosol generating device to operate normally, it may be required to detect the amount of the aerosol generating material remaining on the cartridge accurately.

[Disclosure]

[Technical Problem]

When a remaining amount of an aerosol generating material is not detected, it cannot be checked whether an aerosol generating device can be used, resulting in user inconvenience. Also, a degree at which the aerosol generating material is heated may be differently required according to the remaining amount, and thus, when the remaining amount cannot be detected, aerosols may be heterogeneously provided.

Thus, in order to provide aerosols more heterogeneously, a technology for measuring the remaining amount of the aerosol generating material accurately is required.

Provided are an aerosol generating device that may measure the remaining amount of a liquid cartridge mounted on the aerosol generating device accurately, and a controlling method of the aerosol generating device.

The problems to be solved through embodiments of the disclosure are not limited to the above-mentioned problems, and problems that are not mentioned will be clearly understood by one of ordinary skilled in the art from the specifications and the accompanying drawings.

Additional aspects will be set forth in part in the description which follows and, in part, will be apparent from the description, or may be learned by practice of the presented embodiments of the disclosure.

[Technical Solution]

According to an embodiment, an aerosol generating device may include a detachable cartridge including a liquid storing portion storing an aerosol generating material and a heater configured to evaporate the aerosol generating material, an electrode member disposed on one surface of a main body to face one surface of the cartridge, a capacitive sensor configured to apply a certain measurement signal to the electrode member and to receive a sensing signal received from the electrode member, and a processor configured to calculate a capacitance value based on the sensing signal received from the capacitive sensor and to calculate a remaining amount of an aerosol generating material stored in the liquid storing portion based on the calculated capacitance value and a preset gain value.

The processor may be further configured to calculate the capacitance value based on a charging time and a discharging time of the electrode member.

The preset gain value may be set differently for each aerosol generating device through a correction work when the aerosol generating device is manufactured.

The preset gain value may be a coefficient multiplied to a capacitance value measured while the cartridge fully filled with the aerosol generating material is mounted on the main body so that the measured capacitance value has a uniform capacitance value.

The processor may be further configured to correct the capacitance value by multiplying the calculated capacitance value by a preset gain value and adding a certain offset value thereto and to output a remaining amount of the aerosol generating material corresponding to the corrected capacitance value.

The aerosol generating device may further include a memory storing at least one of the preset gain value and the certain offset value.

The processor may be further configured to set a difference as much as a certain value between levels of the remaining amount of the aerosol generating material by reflecting hysteresis effects according to noise by external interference and a level change of the liquid storing portion.

The aerosol generating device may further include a puff sensor configured to detect inhalation of the evaporated aerosol generating material, wherein the processor may be further configured to count a number of puffs sensed by the puff sensor and to calculate a remaining amount based on puffs, corresponding to an accumulated sum of the counted number of puffs.

The processor may be further configured to compare the calculated remaining amount of the aerosol generating device with the remaining amount based on puffs, and not to output the calculated remaining amount of the aerosol generating material when a difference is greater than or equal to a threshold value.

The aerosol generating device may further include a display configured to output an icon corresponding to the remaining amount of the aerosol generating material, wherein the processor may be further configured to calculate the remaining amount of the aerosol generating material when the cartridge is mounted on the main body, and to control an icon corresponding to the calculated remaining amount to be output on the display.

The display may be configured to output the remaining amount of the aerosol generating material as at least four icons corresponding to a lot/medium/little/none.

The electrode member may have an area corresponding to an area of the liquid storing portion of the cartridge.

The electrode member may be separated from the liquid storing portion of the cartridge by 0.55 mm to 1.55 mm.

The electrode member and the capacitive sensor may be connected to each other via a connector including a C-clip.

According to another embodiment, a controlling method of an aerosol generating device may include applying a certain measurement signal to an electrode member disposed on one surface of a main body to face one surface of a detachable cartridge, receiving a sensing signal received from the electrode member, calculating a capacitance value based on the sensing signal received from the capacitive sensor, and calculating a remaining amount of the aerosol generating material stored in the liquid storing portion of the cartridge, based on the calculated capacitance value and a preset gain value.

[Advantageous Effects]

According to the various embodiments, a remaining amount of a liquid cartridge mounted on an aerosol generating device can be accurately measured.

In addition, in capacitance-based remaining amount measurement, a remaining amount of an aerosol generated material may be measured based on the amount of change with respect to a reference value set for each device during manufacture, rather than based on the same threshold, so as to reduce deviation of devices, and thus, remaining amount measurement optimized for each device can be performed.

However, the effects according to the embodiments are not limited to the above-mentioned effects, and effects that are not mentioned will be clearly understood by one of ordinary skilled in the art from the specifications and the accompanying drawings.

[Description of Drawings]

The above and other aspects, features, and advantages of certain embodiments of the disclosure will be more apparent from the following description taken in conjunction with the accompanying drawings, in which:

FIG. 1 is a diagram of an aerosol generating device according to an embodiment;
FIG. 2 is a diagram of an aerosol generating device according to another embodiment;
FIG. 3 is a front perspective view of an aerosol generating device according to an embodiment;
FIG. 4 is a coupling perspective view of a body, a cartridge, and a cap of an aerosol generating device according to an embodiment;
FIG. 5 is a cross-sectional view of an aerosol generating device according to an embodiment;
FIG. 6 is a front perspective view of an aerosol generating device according to another embodiment;
FIG. 7 is a coupling perspective view of a body, a cartridge, and a cap of an aerosol generating device according to another embodiment;
FIG. 8 is an exploded perspective view of an aerosol generating device according to another embodiment;
FIG. 9 is a cross-sectional view of a cartridge of an aerosol generating device according to another embodiment;
FIG. 10 is a cross-sectional view of an aerosol generating device according to another embodiment;
FIGS. 11A through 11C are cross-sectional views of an aerosol generating device according to an embodiment;
FIGS. 12A and 12B are block diagrams of an aerosol generating device according to an embodiment;
FIG. 13 is a flowchart illustrating a controlling method of an aerosol generating device according to another embodiment;
FIG. 14 is a flowchart illustrating a controlling method of an aerosol generating device according to another embodiment;

FIG. 15 is a flowchart illustrating a controlling method of an aerosol generating device according to another embodiment;

FIG. 16 is an exemplary diagram for measuring the remaining amount of a cartridge according to an embodiment;

FIG. 17 is an exemplary diagram for displaying the remaining amount of a cartridge according to an embodiment; and

FIG. 18 is a block diagram of an aerosol generating device according to an embodiment.

[Mode for Invention]

Hereinafter, embodiments will be described in detail with reference to the accompanying drawings, and the same or similar components will be assigned the same reference numerals regardless of the reference numerals in the drawings, and the same descriptions thereof will be omitted.

The suffixes "module", "-er", and "-or" for the components used in the following description are given or used interchangeably by considering only the ease of writing the description, and do not have distinct meanings or roles in themselves.

In addition, when describing the embodiments of the disclosure, the detailed description of the related known art, which may obscure the subject matter of the embodiments, may be omitted. Also, the accompanying drawings are only intended to facilitate understanding of the embodiments described herein, and the spirit of the disclosure is not limited by the accompanying drawings and should be understood to include all changes, equivalents or alternatives included in the spirit and scope of the disclosure.

Although the terms first, second, etc. may be used herein to describe various elements or components, these elements or components should not be limited by these terms. These terms are only used to distinguish one element or component from another element or component.

When an element is referred to as being "connected to" or "coupled to" another element, it may be directly connected or coupled to the other element or intervening elements may be present. In contrast, when an element is referred to as being "directly connected to" or "directly coupled to" another element, there are no intervening elements present.

The singular forms are intended to include the plural forms as well, unless the context clearly indicates otherwise.

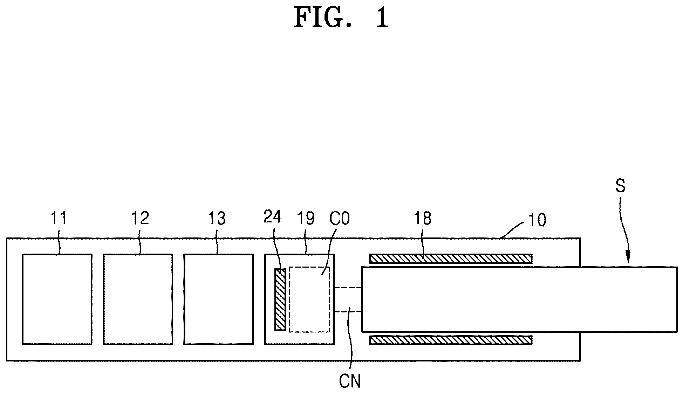

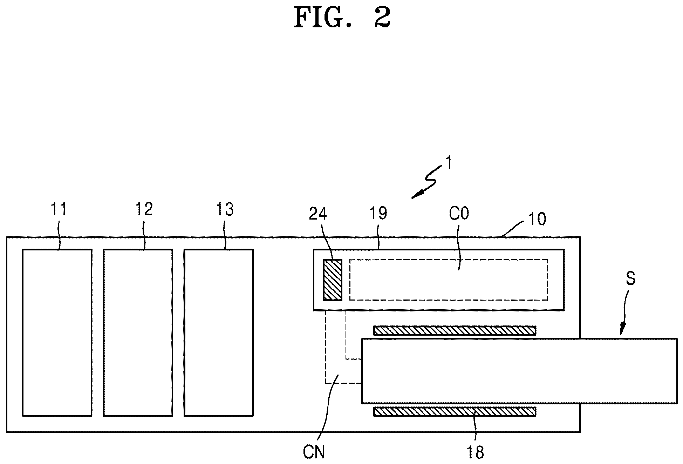

FIGS. 1 and 2 illustrate an aerosol generating device 1 according to embodiments.

Referring to FIG. 1, the aerosol generating device 1 may include at least one of a power source 11, a controller 12, a sensor 13, a heater 18, and a cartridge 19. At least one of the power source 11, the controller 12, the sensor 13, and the heater 18 may be arranged inside a body 10 of the aerosol-generating device 1. The body 10 may provide a space opened upwards so that a stick S, which is an aerosol generating article, is inserted thereinto. The space opened upwards may be referred to as an insertion space. The insertion space may be formed by being recessed toward the inside of the body 10 by a certain depth so that at least a portion of the stick S may be inserted thereinto. The depth of the insertion space may correspond to a length of a region in the stick S, which includes an aerosol generating material and/or a medium. A lower end of the stick S may be inserted into the body 10, and an upper end of the stick S may protrude to the outside of the body 10. A user may inhale air by holding, in the mouth, the upper end of the stick S exposed to the outside.

The heater 18 may heat the stick S. The heater 18 may extend long upwards around a space into which the stick S is inserted. For example, the heater 18 may be in the form of a tube including a hollow therein. The heater 18 may be arranged around the insertion space. The heater 18 may be arranged to surround at least a portion of the insertion space. The heater 18 may heat the insertion space or the stick S inserted into the insertion space. The heater 18 may include an electrically resistive heater and/or an induction heater.

For example, the heater 18 may be a resistive heater. For example, the heater 18 may include an electrically conductive track and the heater 18 may be heated when currents flow through the electrically conductive track. The heater 18 may be electrically connected to the power source 11. The heater 18 may be provided with a current from the power source 11 and directly generate heat.

For example, the aerosol generating device 1 may include an induction coil surrounding the heater 18. The induction coil may generate heat in the heater 18. The heater 18 may be a susceptor, and the heater 18 may generate heat by a magnetic field generated by an AC current flowing through the induction coil. The magnetic field may pass through the heater 18 and generate an eddy current within the heater 18. The current may generate heat in the heater 18.

Meanwhile, a susceptor may be included inside the stick S, and the susceptor inside the stick S may generate heat by the magnetic field generated by the AC current flowing through the induction coil.

The cartridge 19 may contain an aerosol generating material in any one of a liquid state, a solid state, a gaseous state, a gel state, and the like. The aerosol generating material may include a liquid composition. For example, the liquid composition may be a liquid including a tobacco-containing material having a volatile tobacco flavor component, or a liquid including a non-tobacco material.

The cartridge 19 may be integrally formed with the body 10 or detachably coupled to the body 10.

For example, referring to FIG. 1, the cartridge 19 may be integrally formed with the body 10 and may communicate with the insertion space through an air flow channel CN.

For example, referring to FIG. 2, a space may be formed in one side of the body 10, and at least a portion of the cartridge 19 may be inserted into the space formed in one side of the body 10, so that the cartridge 19 may be mounted in the body 10. The air flow channel CN may be defined by a portion of the cartridge 19 and/or a portion of the body 10, and the cartridge 19 may communicate with the insertion space through the air flow channel CN.

The body 10 may be formed in a structure in which external air may be introduced into the body 10 while the cartridge 19 is inserted the body 10. Here, the external air introduced into the body 10 may pass through the cartridge 19 and flow into the mouth of the user.

The cartridge 19 may include a storage C0 containing the aerosol generating material and/or a heater 24 heating the aerosol generating material in the storage C0. A liquid delivery element impregnated with (containing) the aerosol generating material may be arranged inside the storage C0. Here, the liquid delivery element may include a wick or the like such as a cotton fiber, a ceramic fiber, a glass fiber, or porous ceramic. An electrically conductive track of the heater 24 may be formed in a coil-shaped structure that is wound around the liquid delivery element or in a structure in contact with one side of the liquid delivery element. The heater 24 may be referred to as a cartridge heater 24.

The cartridge 19 may generate an aerosol. When the liquid delivery element is heated by the cartridge heater 24, an aerosol may be generated. The aerosol may be generated by heating the stick S by the heater 18. While the aerosol generated by the cartridge heater 24 and the heater 18 passes through the stick S, a tobacco material may be added to the aerosol, and the aerosol having the tobacco material added thereto may be inhaled into the mouth of the user through one end of the stick S.

The aerosol generating device 1 may include only the cartridge heater 24 and may not include the heater 18 in the body 10. Here, the aerosol generated by the cartridge heater 24 may have the tobacco material added thereto while passing through the stick S and may be inhaled into the mouth of the user.

The aerosol generating device 1 may include a cap (not shown). The cap may be detachably coupled to the body 10 to cover at least a portion of the cartridge 19 coupled to the body 10. The stick S may pass through the cap and be inserted into the body 10.

The power source 11 may supply power so that components of the aerosol generating device 1 operate. The power source 11 may be referred to as a battery. The power source 11 may supply power to at least one of the controller 12, the sensor 13, the cartridge heater 24, and the heater 18. When the aerosol generating device 1 includes an induction coil, the power supply 11 may supply power to the induction coil.

The controller 12 may control an overall operation of the aerosol generating device 1. The controller 12 may be mounted on a printed circuit board (PCB). The controller 12 may control an operation of at least one of the power source 11, the sensor 13, the heater 18, and the cartridge 19. The controller 12 may control operations of a display, a motor, and the like installed in the aerosol generating device 1. The controller 12 may check a state of each of the components of the aerosol generating device 1 to determine whether or not the aerosol generating device 1 is able to operate.

The controller 12 may analyze a result of detection by the sensor 13 and control processes to be performed subsequently. For example, the controller 12 may control power supplied to the cartridge heater 24 and/or the heater 18 so that the operation of the cartridge heater 24 and/or the heater 18 is initiated or terminated, on the basis of the result of the detection by the sensor 13. For example, on the basis of the result of the detection by the sensor 13, the controller 12 may control an amount of power supplied to the cartridge heater 24 and/or the heater 18 and a time for which the power is supplied to the cartridge heater 24 and/or the heater 18 so that the cartridge heater 24 and/or the heater 18 may be heated to a certain temperature or maintain an appropriate temperature.

The sensor 13 may include at least one of a temperature sensor, a puff sensor, an insertion detection sensor, a color sensor, a cartridge detection sensor, and a cap detection sensor. For example, the sensor 13 may sense at least one of a temperature of the heater 18, a temperature of the power source 11, and a temperature inside and outside the body 10. For example, the sensor 13 may sense a puff by a user. For example, the sensor 13 may sense whether or not the stick S is inserted into the insertion space. For example, the sensor 13 may sense whether or not the cartridge 19 is mounted in the body 10. For example, the sensor 13 may sense whether or not the cap is mounted on the body 10.

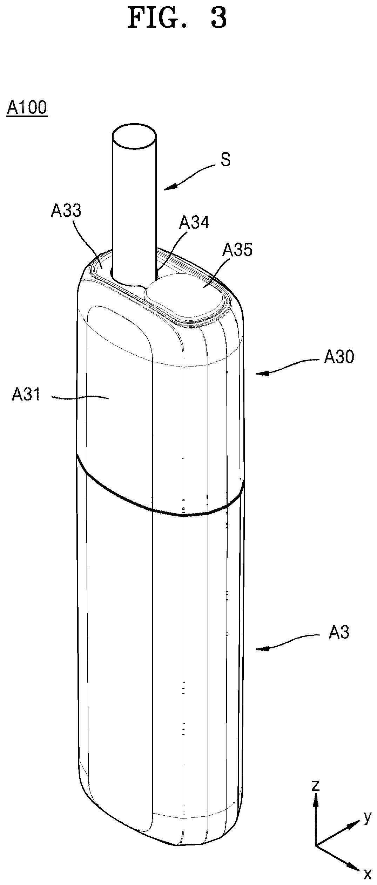

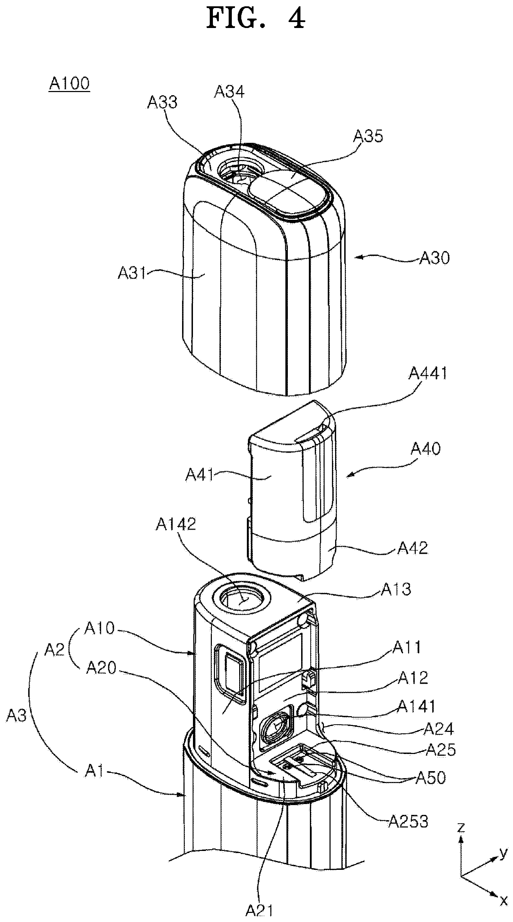

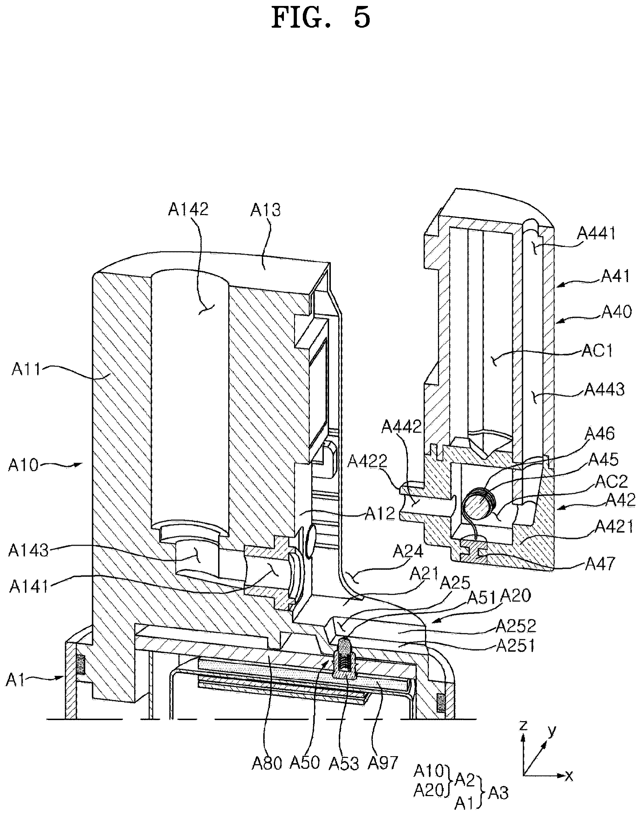

FIG. 3 is a front perspective view of an aerosol generating device according to an embodiment, FIG. 4 is a combined perspective view of a body, a cartridge, and a cap of an aerosol generating device according to an embodiment, and FIG. 5 is a cross-sectional view of an aerosol generating device according to an embodiment.

Referring to FIG. 3, an aerosol generating device A100 according to an embodiment may include a body A3. The aerosol generating device A100 may include a cap A30. The aerosol generating device A100 may include a cartridge A40. The cartridge A40 may be detachably coupled to one side of the body A3. The cap A30 may be detachably coupled to the body A3 to cover the cartridge A40. A stick S may pass through the cap A30 and be inserted into the body A3.

Referring to FIG. 4, the body A3 may include a lower body A1 and an upper body A2. Components of the aerosol generating device A100, such as a battery and a controller, may be installed inside the lower body A1. The upper body A2 may be coupled to an upper side of the lower body A1.

The upper body A2 may include a column A10 and a seating portion A20. The column A10 may extend long in a vertical direction. The column A10 may include an outer wall A11, an inner wall A12, and an upper wall A13.

The seating portion A20 may protrude from a lower portion of the inner wall A12 of the column A10. The seating portion A20 may face an upper side. A cartridge area A24 may be formed between the inner wall A12 of the column A10 and the seating portion A20. The cartridge area A24 may be located on one side of the inner wall A12 of the column A10 and may be located above the seating portion A20.

The column A10 may include an insertion space A142. The insertion space A142 may extend in the vertical direction inside the column A10 and may be opened upwards so that the upper wall A13 is opened.

A body inlet A141 may be formed in one side of the column A10. The body inlet A141 may be formed by opening the inner wall A12. The body inlet A141 may be opened to the outside of the column A10. The body inlet A141 may communicate with the insertion space A142. The body inlet A141 may be arranged to face the cartridge area A24. The body inlet A141 may communicate with the cartridge area A24.

The cartridge A40 may be detachably coupled to the upper body A2 in the cartridge area A24. The cartridge A40 may be coupled to the inner wall A12 of the column A10 and may be seated on the seating portion A20 so that a bottom thereof is supported. The cartridge A40 may include a first container A41 and a second container A42. The first container A41 may be arranged on an upper side of the second container A42. The first container A41 may store a liquid.

The cap A30 may cover the upper body A2 and may be detachably coupled to the body A3. The cap A30 may cover the upper body A2 and the cartridge A40 coupled to the upper body A2. The cap A30 may have formed therein a space into which the upper body A2 and the cartridge A40 are inserted. The space inside the cap A30 may be opened downwards. A sidewall A31 of the cap A30 may surround a side portion of the space inside the cap A30. An upper wall A33 of the cap A30 may cover an upper portion of the space inside the cap A30. An insertion hole A34 may be formed by opening the upper wall A33. When the cap A30 is coupled to the body A3, the insertion hole A34 may communicate with the insertion space A142 above the insertion space A142. A cover A35 may be movably installed on the upper wall A33. The cover A35 may slide on the upper wall A33. The cover A35 may open and close the insertion hole A34.

Referring to FIG. 5, a first chamber AC1 may be formed inside the first container A41. A liquid may be stored in the first chamber AC1. A second chamber AC2 may be formed inside the second container A42.

A cartridge inlet A441 may be formed by opening the cartridge A40. A cartridge outlet A442 may be formed by opening the cartridge A40. A cartridge flow path A443 may connect the cartridge inlet A441 to the second chamber AC2. The cartridge outlet A442 may communicate with the second chamber AC2.

The cartridge outlet A442 may be formed by opening one side of the second container A42. A discharge port A422 may surround the cartridge discharge outlet A442. The discharge port A422 may protrude from one side of the second container A42. When the cartridge A40 is coupled to the upper body A2, the discharge port A422 may be inserted into the body inlet A141, and the cartridge outlet A442 and the body inlet A141 may communicate with each other.

A wick A45 may be installed in the second chamber AC2. The wick A45 may be connected to the first chamber AC1. The wick A45 may be supplied with a liquid from the first chamber AC1. A heater A46 may generate heat and heat the wick A45. The heater A46 may be arranged in the second chamber AC2. The heater A46 may be wound around the wick A45. When the heater A46 heats the wick A45, an aerosol may be generated around the wick A45 in the second chamber AC2.

A heater terminal A47 may be exposed to a lower portion of the cartridge A40. The heater terminal A47 may be formed at a bottom of the second container A42. The heater terminal A47 may be electrically connected to the heater A46. When the cartridge A40 is coupled to the upper body A2, the heater terminal A47 may be in contact with and electrically connected to a first pin A50. Here, the heater terminal A47 may be referred to as a second pin A47.

The first pin A50 may protrude to the outside of the seating portion A20. The first pin A50 may be supplied with power from a battery installed inside the lower body A1 through a connector A97 and provide the power to the heater terminal A47 and the heater A46. The heater A46 may be supplied with power and generate heat.

Air outside the cartridge A40 may be introduced into the cartridge A40 through the cartridge inlet A441. The air may sequentially flow through the cartridge inlet A441, the cartridge flow path A443, the second chamber AC2, and the cartridge outlet A442. Air inside the cartridge A40 may be discharged to the outside of the cartridge A40 through the cartridge outlet A442. The air introduced into the cartridge A40 may be accompanied by an aerosol generated in the second chamber AC2 and discharged to the outside of the cartridge A40 through the cartridge outlet A442.

The first pin A50 may be arranged inside the body A3 and may protrude to the outside of the body A3. The body A3 may include the seating portion A20.

The seating portion A20 may have an outer recessed groove A25. The outer recessed groove A25 may be formed by recessing an upper surface A21 of the seating portion A20 downwards. The outer recessed groove A25 may be located below the cartridge area A24. The upper surface A21 of the seating portion A20 may be referred to as an outer surface of the body A3. The outer recessed groove A25 may be formed in the outer surface of the body A3.

A lower portion of the outer recessed groove A25 may be covered with a bottom portion A251, and a side portion of the outer recessed groove A25 may be covered with a circumferential portion A252. An upper side of the outer recessed groove A25 may be opened. One side portion of the outer recessed groove A25 may be opened without being covered with the circumferential portion A252. When an x direction indicated in a coordinate system is defined as the front, the front of the outer recessed groove A25 may be opened. An upper end of the first pin A50 may convexly protrude or be exposed upwards from the bottom portion A251 of the outer recessed groove A25 toward the outer recessed groove A25.

The bottom of the cartridge A40 may have a shape corresponding to the seating portion A20 and the outer recessed groove A25. When the cartridge A40 is coupled to the upper body A2, the bottom of the cartridge A40 may be seated on the seating port A20, and the first pin A50 and the second pin A47 may be electrically connected to each other.

A plurality of guide portions A253 may be provided. The guide portion A253 may extend long from the front to the rear. The guide portion A253 may be formed to be inclined and gradually become higher from the front to the rear. Each of the plurality of guide portions A253 may be arranged in front of each of a plurality of first pins A50. A height of a rear end of the guide portion A253 adjacent to the first pin A50 may be the same as or similar to a height of the first pin A50.

Accordingly, when the cartridge A40 is coupled to the upper body A2, the guide portion A253 may guide the arrangement of the cartridge A40 so that the first pin A50 and the second pin A47 contact each other.

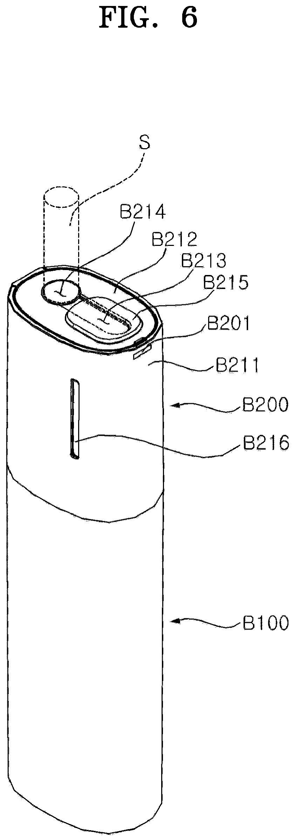

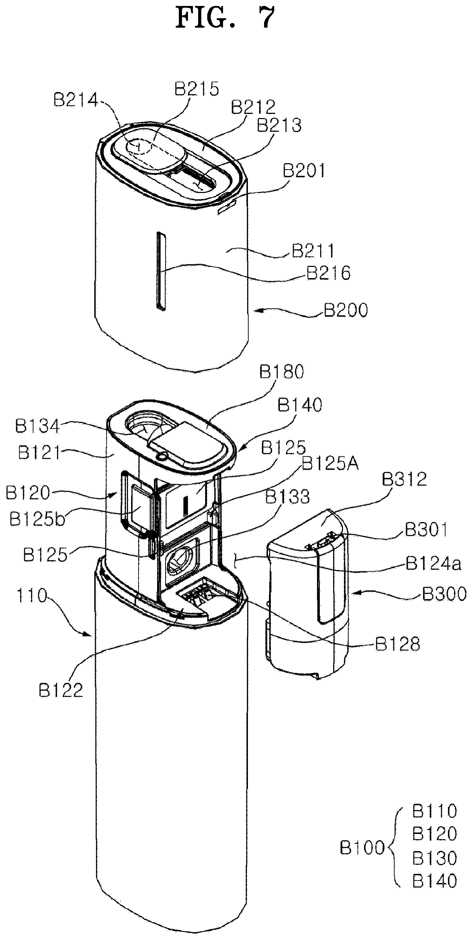

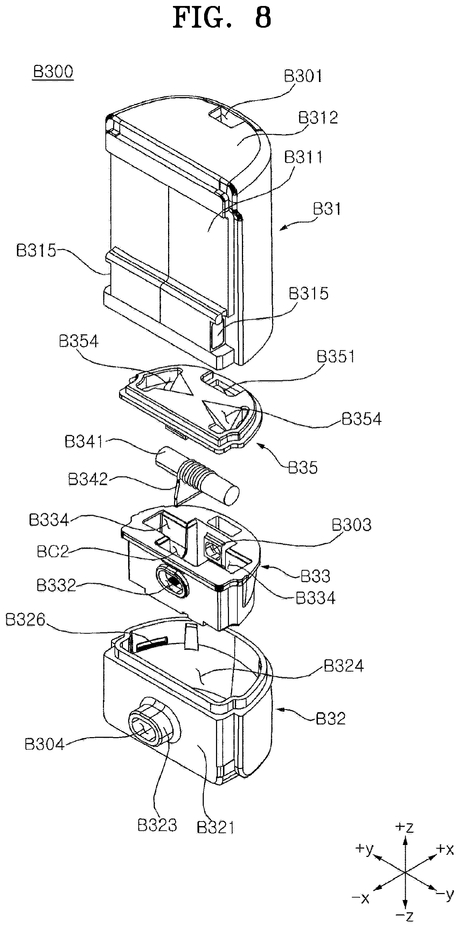

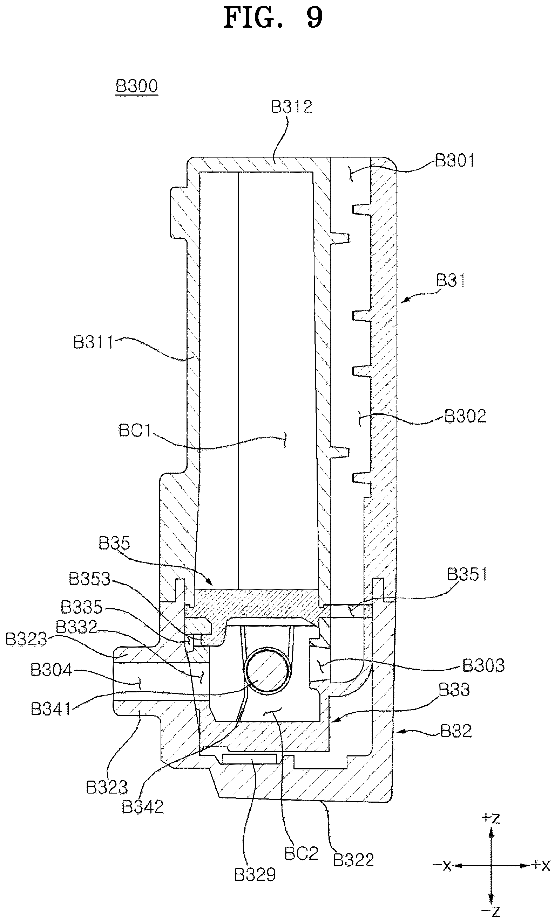

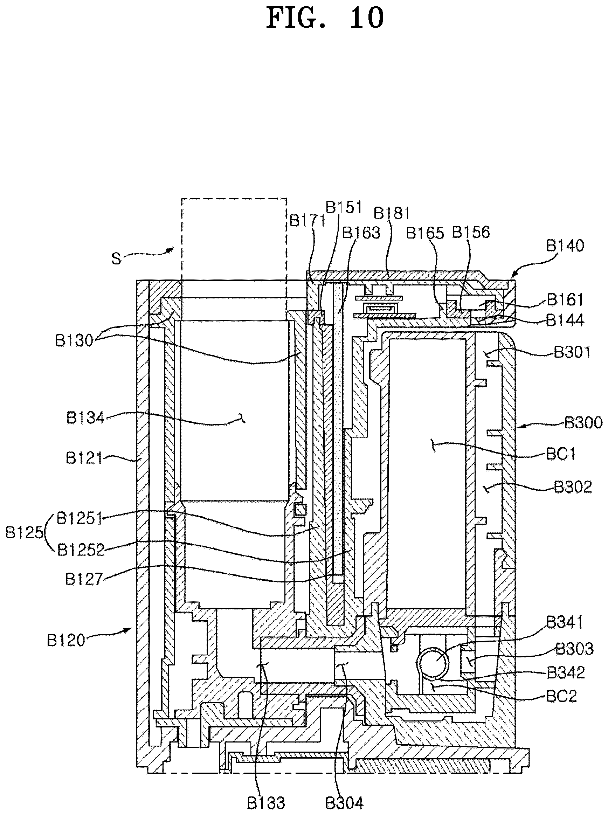

FIG. 6 is a front perspective view of an aerosol generating device according to an embodiment, FIG. 7 is a combined perspective view of a body, a cartridge, and a cap of an aerosol generating device according to an embodiment, FIG. 8 is an exploded perspective view of a cartridge of an aerosol generating device according to an embodiment, FIG. 9 is a cross-sectional view of a cartridge of an aerosol generating device according to an embodiment, and FIG. 10 is a cross-sectional view of an aerosol generating device according to an embodiment.

Referring to FIGS. 6 and 7, an aerosol generating device according to an embodiment may include a body B100 including an upper body B120 and a lower body B110. The upper body B120 may be located on an upper side of the lower body B110. The lower body B110 may extend long in a vertical direction. The body B100 may accommodate therein components for driving the aerosol generating device. The upper body B120 may provide an insertion space B134 that is opened upwards. The insertion space B134 may be located inside the upper body B120. The insertion space B134 may extend long in the vertical direction. The insertion space B134 may be formed in a pipe B130 located inside the upper body B120.

An upper case B200 may have a hollow shape with an open lower portion. The upper body B120 may be inserted into a hollow of the upper case B200. The upper case B200 may be detachably coupled to the body B100. The upper case B200 may cover the upper body B120 to surround the upper body B120. A lateral portion B211 of the upper case B200 may surround and cover a sidewall B121 of the upper body B120. An upper portion B212 of the upper case B200 may cover an upper portion B180 or an outer cover B180 of the upper body B120. When the upper case B200 is coupled to the body B100, the upper case B200 may cover the body B100 and a cartridge B300 together. The cartridge B300 may be arranged inside the upper case B200.

An insertion hole B214 may be formed by opening the upper portion B212 of the upper case B200. The insertion hole B214 may correspond to an opening of the insertion space B134. A cap B215 may be movably installed on the upper portion B212 of the upper case B200. A slide hole B213 may be formed by extending from the insertion hole B214 to one side, in the upper portion B212 of the upper case B200. The cap B215 may move along the slide hole B213. The cap B215 may open and close the insertion hole B214 and the insertion space B134. A stick S may be inserted into the insertion space B134 through the insertion hole B214. For example, the stick S may be a cigarette.

An outer wall B121 and a partition wall B125 may form a lateral portion of the upper body B120. The outer wall B121 and the partition wall B125 may be connected to each other. The outer wall B121 may be covered by an inner surface of the upper case B200. The partition wall B125 may separate a cartridge coupling space B124a from the insertion space B134.

The upper body B120 may include a seating portion B122. The seating portion B122 may extend from a lower portion of the partition wall B125 to one side. The seating portion B122 may be formed on an upper side of the lower body B110. The seating portion B122 may cover a lower portion of the cartridge coupling space B124a. A bottom surface of the cartridge B300 may be seated on and supported by the seating portion B122.

The upper body B120 may include an extension portion B 140. The extension portion B 140 may extend from an upper portion of the partition wall B125 to one side. The extension portion B140 may extend in a direction in which the seating portion B122 is formed. The extension portion B140 may cover an upper portion of the cartridge coupling space B124a. The extension portion B140 may cover an upper end surface of the cartridge B300. The extension portion B140 may cover a cartridge inlet B301 formed in the cartridge B300. A gap through which air may flow may be formed between the extension portion B140 and the cartridge inlet B301.

The cartridge coupling space B124a may be formed on one side of the upper body B120. The cartridge coupling space B124a may be defined by the seating portion B122 and the partition wall B125 of the upper body B120 and the extension portion B140. A bottom of the cartridge coupling space B124a may be covered by the seating portion B122. One side of the cartridge coupling space B124a may be covered by the partition wall B125 of the upper body B120. An upper side of the cartridge coupling space B124a may be covered by the extension portion B140. The cartridge coupling space B124a may be opened to the outside between the seating portion B122 and the extension portion B140.

The cartridge B300 may be inserted into the cartridge coupling space B124a to be coupled to the body B100. The cartridge B300 may be detachably coupled to the body B100. A lateral surface B311 of the cartridge B300 may face the partition wall B125. An upper end surface B312 of the cartridge B300 may be covered by the extension portion B140. A bottom surface B322 of the cartridge B300 may be seated on the seating portion B122. A cartridge terminal B128 may be connected to the cartridge B300 to supply power to a heater B342 inside the cartridge B300.

A coupling hook B125a may be formed at the upper body B120. A pusher B125b may be formed on the upper body B120. The coupling hook B125a and the pusher B125b may be formed in a pair on both sides of the upper body B120 and arranged at locations facing each other. The cartridge B300 may include a hook coupling groove B315. The hook coupling groove B315 may be formed at a location corresponding to the coupling hook B125a. When the cartridge B300 is inserted into the cartridge coupling space B124a, the coupling hook B125a may be coupled to the hook coupling groove B315 to couple the cartridge B300 to the body B100. The pusher B125b and the coupling hook B125a may move in conjunction with each other. When the pusher B125b is pressed, the coupling hook B125a may be moved in a direction detached from the hook coupling groove B315, and the cartridge B300 may be detached from the body B100.

A connection flow path B133 may be formed in a lower portion of the partition wall B125. The connection flow path B133 may communicate with the insertion space B134. The connection flow path B133 may be opened to one side of the upper body B120. When the cartridge B300 is coupled to the body B100, a discharge port B323 may be inserted into the connection flow path B133, and the connection flow path B133 and a cartridge discharge port B304 may communicate with each other.

Referring to FIG. 8, the cartridge B300 may include a first container B31 and a second container B32. The first container B31 may be coupled to an upper side of the second container B32. A plate B35 may be coupled between the first container B31 and the second container B32 or between the first container B31 and a frame B33.

The first container B31 may include a first chamber BC1 that may store a liquid therein. The first container B31 may surround the first chamber BC1, and a lower portion of the first chamber BC1 may be opened. An opening of the first chamber BC1 may be covered by the plate B35.

Referring to FIG. 9, the first container B31 may include an inflow passage B302 through which air passes. The first chamber BC1 and the inflow passage B302 may be separated from each other. The inflow passage B302 may vertically extend long in one side of the first container B31.

The first container B31 may include a cartridge inlet B301. The cartridge inlet B301 may be formed by opening an upper portion of the first container B31 and may communicate with the inflow passage B302. The cartridge inlet B301 may communicate with an upper end of the inflow passage B302. A lower end of the inflow passage B302 may communicate with a connection hole B351 and a chamber inlet B303.

The second container B32 may be coupled to a lower portion of the first container B31. The second container B32 may include a space B324 having an opened upper portion and a covered lower portion. The frame B33 may be accommodated inside the space B324 of the second container B32.

The second container B32 may include the cartridge outlet B304. The cartridge outlet B304 may be formed in a lateral portion B321 of the second container B32. The cartridge outlet B304 may be formed inside a port protruding from the lateral portion of the second container B32 in a thickness direction. The cartridge outlet B304 may communicate with the space B324. The second container B32 may include a discharge port B323. The discharge port B323 may have the cartridge outlet B304 formed therein. The discharge port B323 may protrude from the lateral portion B321 of the second container B32 to one side. The discharge port B323 may surround the cartridge outlet B304. The cartridge outlet B304 may be referred to as an outlet B304.

The frame B33 may be inserted into the space B324 inside the second container B32 to be coupled to the second container B32. A fastening element B326, which protrudes from a sidewall of the second container B32 to the space B324, may be fastened to the frame B33 to fix the frame B33.

The frame B33 may include a second chamber BC2 therein. The frame B33 may surround the second chamber BC2, and an upper portion of the second chamber BC2 may be opened. The upper portion of the second chamber BC2 may be covered by the plate B35.

The frame B33 may include the chamber inlet B303. The chamber inlet B303 may be formed by opening one surface of a sidewall surrounding the second chamber BC2. The chamber inlet B303 may be bent and extend upwards from the second chamber BC2 toward the inflow passage B302. One end of the chamber inlet B303 may communicate with the second chamber BC2, and the other end of the chamber inlet B303 may be connected to the inflow passage B302 and the connection hole B351.

The frame B33 may include a chamber outlet B332. The chamber outlet B332 may be formed in a lateral portion of the frame B33. The chamber outlet B332 may communicate with the second chamber BC2. The chamber outlet B332 may be formed inside a port protruding from the lateral portion of the frame B33 in a thickness direction. The chamber outlet B332 may communicate with the second chamber BC2. The chamber outlet B332 may be formed at a location corresponding to the cartridge outlet B304. The chamber outlet B332 may be formed at a location opposite to the chamber inlet B303 with respect to the second chamber BC2. When the frame B33 is coupled to the second container B32, the chamber outlet B332 and the cartridge outlet B304 may communicate with each other.

The frame B33 may include a wick coupling groove B334 therein. The wick coupling groove B334 may communicate with the second chamber BC2. The wick coupling groove B334 may be formed by the second chamber BC2 being depressing to one side thereof. The wick coupling grooves B334 may be formed in a pair, and the pair of wick coupling grooves B334 may be formed to be located opposite to each other in the second chamber BC2. An upper portion of the wick coupling groove B334 may be opened.

A wick B341 may have a cylindrical shape extending laterally long in the second chamber BC2. Both ends of the wick B341 may be located by being inserted into the pair of wick coupling grooves B334, respectively. A central portion of the wick B341 may be located in the second chamber BC2. The wick B341 may be connected to the first chamber BC1 to be supplied with a liquid from the first chamber BC1. The wick B341 may be fixed in the wick coupling groove B334 by the frame B33 and the plate B35.

The heater B342 may be wound around the central portion of the wick B341. The heater B342 may generate heat to heat the wick B341. For example, the heater B342 may be a resistive heater. The heater B342 may be arranged in the second chamber BC2. An end of the heater B342 may pass through a bottom of the frame B33 and be electrically connected to an electrode arranged at the bottom of the second container B32.

The plate B35 may be coupled between the first container B31 and the second container B32 or between the first container B31 and the frame B33. The plate B35 of the frame B33 may cover and seal an opened portion of the first chamber BC1. The plate B35 may cover an upper portion of the frame B33. The plate B35 may cover and seal an opened portion of the second chamber BC2.

The plate B35 may have the connection hole B351 in one side thereof. The connection hole B351 may be located between the inflow passage B302 and the chamber inlet B303. The connection hole B351 may connect the inflow passage B302 to the chamber inlet B303.

The plate B35 may include a liquid inflow hole B354. A pair of liquid inflow holes B354 may be formed at locations corresponding to the wick coupling grooves B334. The pair of liquid inflow holes B354 may be located above both ends of the wick B341. The liquid inflow hole B354 may connect the first chamber BC1 to the wick coupling groove B334. The wick B341 may be connected to the first chamber BC1 through the liquid inflow hole B354.

A hook B353 may be formed above the chamber outlet B332 at a location adjacent to the chamber outlet B332. The hook B353 may protrude downwards from one side of the plate B35. The hook B353 may be inserted into and fastened to a hook groove B335 formed in an upper portion of the frame B33. The plate B35 may be fastened to the frame B33, and the first container B31 coupled to the second container B32 may press an edge portion of the plate B35 toward the frame B33.

A user may hold, in the mouth, the stick S inserted into the insertion space B134 and inhale air. While the upper case B200 is coupled to the body B100, air may be introduced into the cartridge inlet B301 through an opening B201 formed in the upper case B200. Air may be introduced into the cartridge B300 through the cartridge inlet B301 and may be discharged to the outside of the cartridge B300 through the cartridge outlet B304. The air introduced into the cartridge B300 may be discharged to the outside by sequentially passing through the inflow passage B302, the connection hole B351, the chamber inlet B303, the second chamber BC2, the chamber outlet B332, and the cartridge outlet B304.

When the heater B342 heats the wick B341, an aerosol may be formed from the wick B341 within the second chamber BC2. Air passing through the cartridge B300 may be accompanied by an aerosol from the second chamber BC2 and discharged to the cartridge outlet B304. The air discharged through the cartridge outlet B304 may be supplied through the connection flow path B133 to the insertion space B134 and the stick S inserted into the insertion space B134.

Referring to FIG. 10, the upper body B120 may include the outer wall B121 and the partition wall B125. The outer wall B121 and the partition wall B125 may be connected to each other. The partition wall B125 may be formed by extending vertically between the pipe B130 and the cartridge coupling space B124a.

The extension portion B140 may be formed by extending from the upper portion of the upper body B120 to one side. The upper end surface B312 of the cartridge B300 may be covered by the extension portion B140. The extension portion B140 may cover the cartridge inlet B301 and the periphery thereof. A gap may be formed between the extension portion B140 and the cartridge inlet B301 and between a lower portion of the extension portion B140 and the upper end surface B312 of the cartridge B300. The gap may communicate the cartridge inlet B301 with the outside.

The pipe B130 may be formed long in a vertical direction. The pipe B130 may be formed as a hollow. The insertion space B134 may be formed inside the pipe B130. The insertion space B134 may be opened upwards. The insertion space B134 may extend vertically. The connection flow path B133 may be formed inside the pipe B130. The connection flow path B133 may be formed below the insertion space B134. One end of the connection flow path B133 may communicate with the outside of the pipe B130, and the other end of the connection flow path B133 may communicate with the insertion space B134. The connection flow path B133 may be bent to one side from a lower portion of the insertion space B134.

A first sensor B161 may be installed inside the extension portion B140. The first sensor B161 may face the upper end surface B312 of the cartridge B300 or the cartridge inlet B301. The first sensor B161 may be installed adjacent to the cartridge inlet B301. The first sensor B161 may be located above the cartridge inlet B301. The first sensor B161 may overlap the cartridge inlet B301 on the basis of the vertical direction.

The first sensor B161 may sense an ambient air flow. The first sensor B161 may be an air flow sensor or a pressure sensor. The first sensor B161 may sense a flow of air through a change in ambient air pressure. At a location adjacent to the cartridge inlet B301, the extension portion B140 may include a first sensing hole B144 for sensing an air flow. The first sensor B161 may be mounted on a substrate arranged inside the extension portion B140 and may be electrically connected to a controller (not shown). The controller may control operations of various types of components connected, on the basis that the first sensor B161 detects the flow of air.

A first sealing portion B151 may be arranged between a first partition wall portion B1251 and an inner plate B171. The first sealing portion B151 may surround and be in contact with an upper end portion of the first partition wall portion B1251. The first sealing portion B151 may be in contact with a lower end of the inner plate B 171.

A sensor accommodation portion B156 of a second sealing portion may seal the periphery of a first sensing hole B144. The sensor accommodation portion B156 may be in contact with an extension plate around the first sensing hole B144. A second sensing hole formed in the sensor accommodation portion B156 may communicate with the first sensing hole B144. The sensor accommodation portion B156 may surround and be in contact with the first sensor B161.

Accordingly, a failure of a substrate or sensor may be prevented by foreign substances, aerosol discharged from around an opening of the pipe B130, or foreign substances through the first sensing hole B144.

In an embodiment, a capacitance measuring method is used to measure the remaining amount of a liquid of a cartridge. In an embodiment, the following three compensation methods, i.e., 1) correction and measuring method (gain value compensation), 2) temperature compensation, 3) degradation compensation may be used to measure the remaining amount of the liquid of the cartridge. The compensation methods 1) through 3 may be applied, or two or more compensation methods may be optionally combined and applied.

1) Correction and measuring method (gain value compensation)

In an aerosol generating device according to the related art, exhaust ratios of the liquid may be different for each user, so that indication of the remaining amount was inaccurate, or whenever a new cartridge was installed, even if it was not a full cartridge, the remaining amount was indicated as a maximum value and thus indication of the remaining amount was accurate.

There is a deviation even when the same genome is measured by natural characteristics of a material used as an electrode in a capacitance-based measurement method, a deviation of an internal circuit element, for example, a capacitor, a resistor, etc., the length of a connected connector, and mechanical tolerance of an electrode assembly.

In an embodiment, in order to overcome the above-described problems, a correction method is performed when an aerosol generating device is manufactured, and the following method is used.

In order to control a charging current amount, an internal current source that is programmable may be adjusted so that a consistent measurement range is measured for each aerosol generating device in in the absence of an external load and thus a based value may be calculated.

In order to solve the problems that there may be a difference even in a change width for each level of a liquid due to the above-described difference, change sensitivity (gain value) may be adjusted. This causes to set an expected fixed value, for example, a gain coefficient or a gain value for creating 10,000 by inserting a measurable maximum object, such as a full cartridge. If necessary, an offset value may be additionally set for detailed tuning.

In an aerosol generating device according to an embodiment, a gain value and an offset value that are set through the above-described correction work may be stored in memory, for example, flash memory of the aerosol generating device. Thus, the gain value or offset value stored in the memory may be different for each aerosol generating device. Instead of determining the remaining amount of the cartridge, based on the same threshold, the remaining amount is determined based on the amount of change with respect to a reference value set in a manufacturing factory for each aerosol generating device by using the gain value or offset value stored for each aerosol generating device, thereby reducing a deviation of the device.

After the above-described correction work is performed, the measured value of the remaining amount of the cartridge may be calculated as given by the following Equation 1.

capacitance value (or the remaining amount of liquid) = measured capacitance value (or the remaining amount of liquid) * gain value + offset value [Equation 1]

In an embodiment, it is determined based on a specified value and may be measured based on a desired level and its resolution. It may be set to a value that considers a hysteresis when interference and water level moves to external objects. For example, when a noise level according to external interference is 200 and hysteresis in each water level are also 200 levels, 800, which is stably twice of a total sum, may be set to be different by level. It should be understood that values of noise levels and hysteresis are exemplary. Also, it should be understood as an exemplary that there is a difference between the level of more than twice the total sum. For example, when 3-stage is measured, there may be a level difference of 1000 in each stage with top: 10500, medium: 9500, and bottom: 8500.

2) Temperature compensation

Generally, capacitance is greatly affected by temperature and thus, temperature compensation thereof is necessary. A simple and efficient method for temperature compensation includes a method of arranging a separate thermometer on an electrode part or using a reference electrode, but it is difficult to apply the method due to a lack of a mounting area of an aerosol generating device that is a small device, characteristics of molding (insert injection), a unit price increase. There is a problem that is difficult to apply as a factor. In addition, e-cigarettes have different characteristics from those of general environment changes, like that the temperature rises very quickly at heating and it cools down that quickly.

Thus, separate compensation according to use cases should be considered in addition to temperature compensation (chamber simulation) for the environment.

In an embodiment, the following two cases may be considered for temperature compensation.

When the aerosol generating device is heated, heat is transferred from an upper part (i.e., cigarette heater) of the device, and the heater is affected by a very high temperature, for example, at least about 240 degrees, and also cools down relatively quickly after smoking is terminated.

When the aerosol generating device is charged, heat is transmitted from a lower part of the device (battery mounting position), which is relatively low, for example, about 60 degrees, and heat dissipation caused by internal sealing is weak and it cools down slowly.

In an embodiment, two temperature compensation equations may be considered as below.

First, a separate temperature compensation equation may be given in each case, because heating and charging have opposite characteristics.

Next, as temperature compensation that may reflect both the two characteristics, the case where compensation is performed by combining, for heating, a heating element or a temperature sensor attached to the heating element, for example, a resistance temperature detector (RTD) and for charging, a temperature sensor attached to a battery pack, for example, a negative temperature coefficient (NTC), is assumed so that temperature correction may be performed with a single temperature compensation equation. Although the RTD and the NTC have been described as examples of each temperature sensor, embodiments are not limited thereto, and the temperature of a heater or a battery may be sensed using various methods.

The higher the temperature characteristics of an electrode material used to measure the remaining amount of the cartridge, the greater the capacitance capacity, temperature compensation may be rewarded according to the following equation 2.

capacitance value (or the remaining amount of liquid) = measured capacitance value (or the remaining amount of liquid) - (a * heater temperature) - (b * battery temperature) [Equation 2]

Here, a and b may be values that may be temporarily set according to characteristics of the aerosol generating device, and generally, the temperature of a heater has a high variation width, and a may be less than b. Although the temperature of the heater and the temperature of the battery have been described as examples, embodiments are not limited thereto, and temperature characteristics of heating components of the aerosol generating device may be considered. In an embodiment, when a cartridge is mounted on a main body of the aerosol generating device or when the remaining amount of the cartridge is required, the temperature of the heater or the battery described above may be measured so that temperature compensation for measured capacitance values may be performed.

3) Degradation compensation

The capacitance value of the level of the cartridge may lead to a change in capacity depending on the long use. For example, there may be a change in characteristics according to the aging of the electrode used to measure the capacitance value, a leakage by aerosol, a pollutant on a connector or a path. In this case, the capacitance value compensated by 1) gain value compensation and 2) temperature compensation may change, and a measurement error may occur.

In an embodiment, compensation according to degradation of the electrode for capacitance measurement may be compensated by using minimum and maximum values that may be measured in the correction process described in 1). Here, the maximum value may be a capacitance value measured when a full cartridge is mounted, and the minimum value may be a capacitance value measured when the empty cartridge is mounted or a cartridge is not mounted.

In an embodiment, when the measured capacitance value after the full cartridge is mounted is greater than the previously-stored maximum value, that is, when the measured capacitance value after the full cartridge is mounted is too higher than the capacitance value in correction, compensation may be performed by subtracting a value as much as the higher value. Here, the level of subtraction may be the ratio of the difference. In addition, in consideration of stability, a fixed rate, for example, about 2%, may be selected to subtract the ratio. For example, when the value of the full cartridge at the time of correction is 10500, and if the value of more than 11000 is measured, 220, which is at a level of 2%, may be removed from the measurement value, and may be determined as a capacitance value (or a cartridge value) compensated for 10780. Here, the ratio and specific numbers for degradation compensation have been described as an example, but embodiments are not limited thereto, and a variety of modifications may be made in consideration of the characteristics of an aerosol generating device.

On the contrary, when the remaining amount value or capacitance value of the cartridge is lowered, the minimum value in a state where no cartridge is mounted in a correction procedure is stored in advance, so that, when the cartridge is removed from the aerosol generating device, the minimum value may be measured, and when the minimum value is less than the value at the time of correction, reverse correction may be performed. In the case of removing the cartridge, there is no problem in monitoring the minimum value, because the external noise cannot be protected according to a contact point, or external objects such as human hands increase the capacitance value.

In an embodiment, since the maximum or minimum value at the time of correction is stored in the memory of the aerosol generating device, when the aerosol generating device is used for a long time, and when the remaining amount of the cartridge is measured, degradation compensation for the capacitance value measured as in the above-described method or the remaining amount value of the cartridge may be performed.

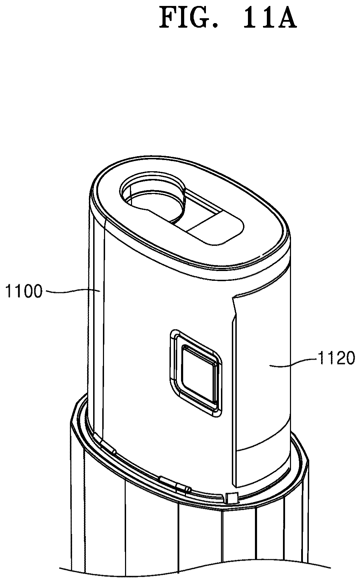

FIGS. 11A through 11C are cross-sectional views of an aerosol generating device according to an embodiment.

Referring to FIG. 11A, the aerosol generating device may include a main body 1100 and a cartridge 1120 mounted on the main body 1100. The cartridge 1120 may be attached/detached to/from the main body 1100. The cartridge 1120 may include a liquid storing portion (not shown) for storing an aerosol generating material, and a heater (not shown) for evaporating the aerosol generating material. The aerosol generating material may include vegetable Glyserin (VG) and propylene glycol (PG). The aerosol generating material may include a mixed liquid of VG and PG, and generally has a higher dielectric constant than vacuum. In an embodiment, the cartridge 1120 may include the aerosol generating material having an amount that may be used together with a disposable cigarette (20 pieces). After using one disposable cigarette and one cartridge together, a user may use the aerosol generating device after replacing a cigarette and a new cartridge. Also, the cartridge 1120 may also store the aerosol generating material having an amount corresponding to the user's number of inhaling one disposable cigarette, for example, 280 puffs, which is 20 times of 14 puffs. Thus, in the aerosol generating device having this shape, it is desirable to check the remaining amount of the cartridge 1120 for storing the aerosol generating material, and accurate calculation of the remaining amount of the aerosol generating device is required. In an embodiment, an aerosol generating device that inhales aerosol by heating an aerosol generating article (cigarette) inserted into a cigarette heater and the aerosol generating material (liquid) stored in the cartridge 1120 together has been described, but embodiments are not limited thereto, and embodiments may also be applied to an aerosol generating device having a shape in which aerosol is inhaled by heating only the aerosol generating material (liquid), an e-vaper, and an e-vaping device.

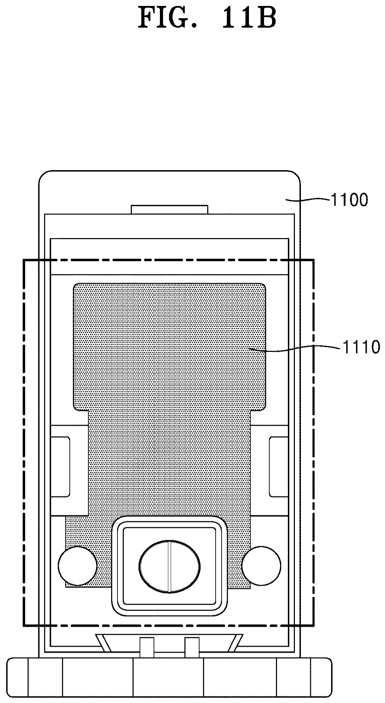

Referring to FIG. 11B, an electrode member 1110 may be disposed on one surface of the main body 1100. Here, the electrode member 1110 may be disposed to face one surface of the cartridge 1120 and a surface to be coupled to the main body 1100. Here, the electrode member 1110 may have an area corresponding to the cartridge 1120 or the liquid storing portion (not shown) of the cartridge 1120. In an embodiment, the area of the electrode member 1110 may have an area corresponding to an area in which one surface of the liquid storing portion faces the main body 1100, so that an electric field reaches up to the end of the liquid storing portion even if the aerosol generating device is inclined. Although not shown, a bottom end of the electrode member 1110 may be connected to a capacitive sensor or a sensor integrated circuit (IC) through a connector such as a C-clip. Also, the capacitive sensor or the sensor IC may be disposed on a separate sensor printed circuit board (PCB) or within a main micro controller unit (MCU). In an embodiment, the electrode member 1110 may have a ground so as to remove noise for external objects having its own dielectric constant, such as human hands, when capacitance is measured.

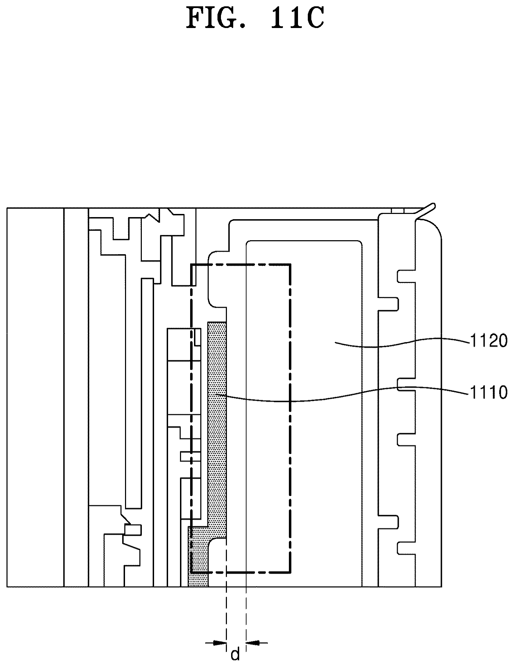

Referring to FIG. 11C, there may be a certain distance d between the electrode member 1110 and the cartridge 1120 mounted on the main body 1100 or the liquid storing portion to be detected. The certain distance d may be 0.55 mm to 1.55 mm. The certain distance d may be maintained so that interference due to another conductor in the aerosol generating device may be prevented and a maximum detection distance of the capacitive sensor may be maintained.

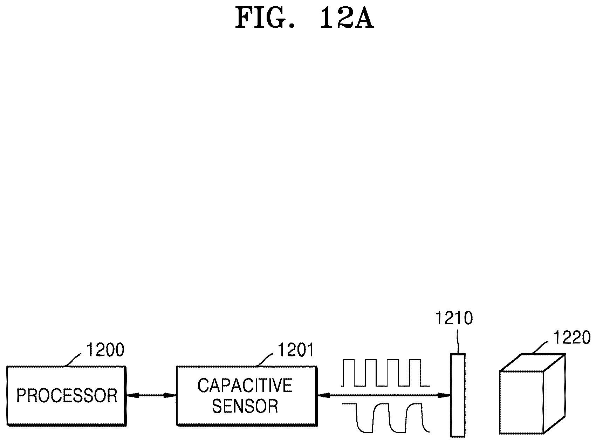

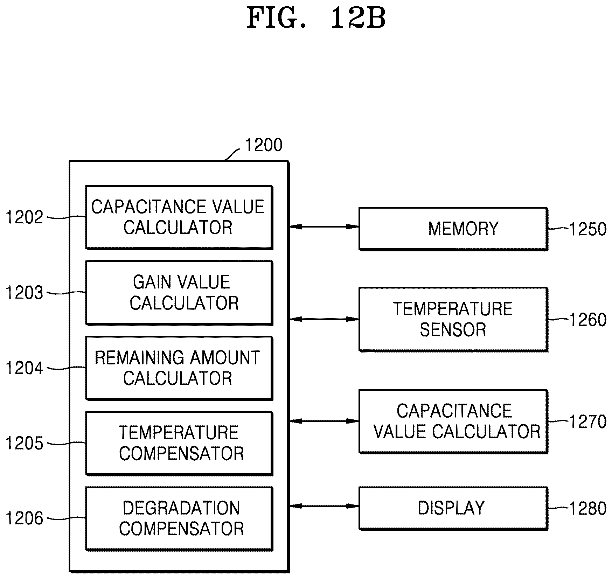

FIGS. 12A and 12B are block diagrams of an aerosol generating device according to an embodiment,

Referring to FIG. 12A, the aerosol generating device may include a processor 1200, a capacitive sensor 1201, an electrode member 1210, and a cartridge 1220. In an embodiment, the processor 1200 may control the capacitive sensor 1201 to apply a measurement signal to the electrode member 1210, and may receive a sensing signal from the electrode member 1210. The processor 1200 may calculate a capacitance value based on the sensing signal received from the capacitive sensor 1201 and may calculate the remaining amount of the aerosol generating material stored in the liquid storing portion of the cartridge 1220 based on the calculated capacitance value. Here, the processor 1200 may measure a charging time due to the measurement signal applied to the electrode member 1210, for example, current signals, and a discharging time due to the sensing signal received from the electrode member 1210, for example, current signals, and may calculate a capacitive value of the electrode member 1210 based on the charging time and the discharging time. The processor 1200 may calculate the remaining amount of the aerosol generating material by referring to a matching table between the absolute value of the calculated capacitance value or the capacitance value and the remaining amount of the aerosol generating material. In an embodiment, the capacitance value may be calculated by measuring the charging time and the discharging time of the electrode member. However, embodiments are not limited thereto, and the capacitance value may also be calculated by using various well-known technologies.

The capacitive sensor 1201 may be a function module within the processor 1200 or a separate sensor IC. The capacitive sensor 1201 may be connected to the electrode member 1210 through a connector such as a C-clip, but embodiments are not limited thereto.

Referring to FIG. 12B, the aerosol generating device may include a processor 1200, memory 1250, a temperature sensor 1260, a cartridge attachment/detachment detecting sensor 1270, and a display 1280, and the processor 1200 may include a capacitance value calculator 1202, a gain value calculator 1203, a remaining amount calculator 1204, a temperature compensator 1205, and a degradation compensator 1206. Here, the aerosol generating device may exclude some components or functions from all components illustrated. As described above, the aerosol generating device according to an embodiment may use all of gain value compensation, temperature compensation, degradation compensation so as to compensate for the measurement value of the remaining amount of the cartridge based on capacitance measurement, and each compensation method may also be separately applied.

Referring to FIG. 12B, the capacitance value calculator 1202 may calculate the charging time/discharging time in response to the sensing signal received from the capacitive sensor, and may calculate a capacitance value based on the charging time/discharging time.

The gain value calculator 1203 may calculate a gain value stored in the memory 1250 or a gain value. Here, the gain value stored in the memory or the gain value may be a value that is stored in advance through a correction work when the aerosol generating device is manufactured. Also, the gain value calculator 1203 may also calculate an offset value stored in the memory 1250.

The remaining amount calculator 1204 may calculate the remaining amount of the cartridge according to the capacitance value compensated by multiplying the capacitance value calculated by the capacitance value calculator 1202 by the gain value calculated by the gain value calculator 1203. Here, the remaining amount of the cartridge may also be calculated by referring to the matching table of the remaining amount corresponding to the absolute value of the measured capacitance value or the capacitance value. Also, when the offset value is stored in the memory 1250, the capacitance value may be compensated for by summing offset values.

The temperature compensator 1205 may perform temperature compensation for the remaining amount of the cartridge calculated by the remaining amount calculator 1204 in consideration of the temperature of the heater or temperature of the battery detected from the temperature sensor 1260. Here, temperature compensation may be performed for the remaining amount of the cartridge after gain compensation is performed, or temperature compensation may also be performed for the capacitance value calculated by the capacitance value calculator 1202. The temperature sensor 1260 may include a temperature sensor of a heater and a temperature sensor of a battery, etc. Here, the temperature compensator 1205 may be used when usage conditions of the aerosol generating device, for example, when the remaining amount of the cartridge is calculated immediately after heating or charging.

The degradation compensator 1206 may perform compensation due to degradation of the electrode member for the capacitance value calculated by the remaining amount calculator 1204. When the capacitance value measured by the capacitance value calculator 1202 for the full cartridge is greater than the maximum value based on the maximum value (capacitance value of the full cartridge) and the minimum value (capacitance value when an empty cartridge is mounted or a cartridge is not mounted) during a correction work stored in the memory 1250, the degradation compensator 1206 may subtract a difference value or a certain ratio from the measured capacitance value. On the contrary, when an empty cartridge is mounted or a cartridge is not mounted, and when the capacitance value calculated by the capacitance calculator 1202 is less than the minimum value, the difference value or the certain ratio may be added to the measured capacitance value. The degradation compensator 1206 may also perform degradation compensation after gain compensation in the remaining amount calculator 1204 or temperature compensation in the temperature compensator 1205 is performed. Also, since the degradation compensator 1206 is compensation due to degradation of the electrode member, degradation compensation may also be optionally performed in consideration of the usage period of the aerosol generating device.

The cartridge attachment/detachment detection sensor 1270 may detect attachment or separation (detachment) of the cartridge to or from the aerosol generating device. Here, the processor 1200 may start measurement of the remaining amount of the cartridge depending on whether attachment/detachment of the cartridge attachment/detachment detection sensor 1207 is detected. For example, when a new cartridge is mounted, the processor 1200 may measure the remaining amount of the mounted cartridge and display the measured remaining amount on the display 1280.

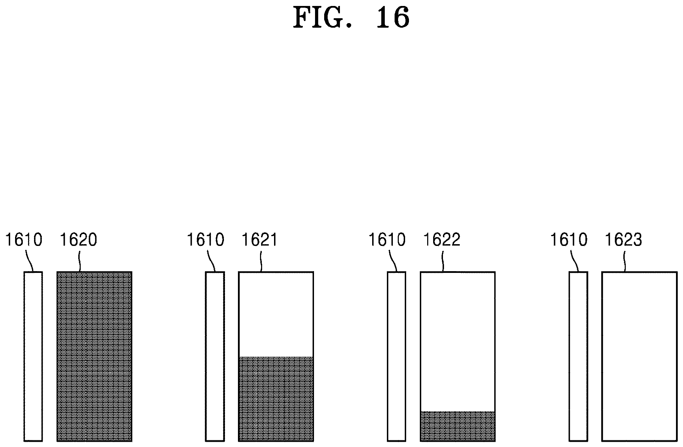

The processor 1200 may calculate the remaining amount of the cartridge corresponding to the capacitance value that is gain compensated, temperate compensated and degradation compensated by the remaining amount calculator 1204, the temperature compensator 1205, and the degradation compensator 1206 with top/medium/bottom/none levels. FIG. 16 is an exemplary diagram for measuring the remaining amount of a cartridge according to an embodiment. Referring to FIG. 16, the remaining amount of the cartridge may be classified into 100% top (1620), 50% medium (1621), 15% bottom (1622), and none (1623) based on the capacitance value measured through the electrode member 1610. Here, each level or value is exemplary, and embodiments are not limited thereto, and various detailed modifications are also possible.

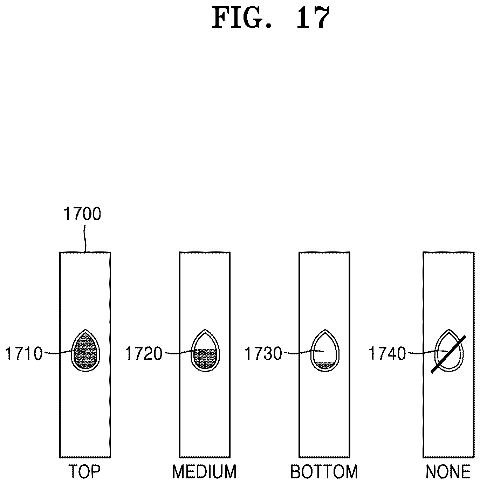

The display 1280 may display the remaining amount of the cartridge according to control of the processor 1200. FIG. 17 is an exemplary diagram for displaying the remaining amount of a cartridge according to an embodiment. Referring to FIG. 17, the display 1280 may display icons in which the remaining amount of the cartridge corresponds to top/medium/bottom/none.

The processor 1200 may accumulate and count the number of detected puffs from a puff sensor (not shown), which detects the inhalation of evaporated aerosol in the aerosol generating device, and may calculate the remaining amount of cartridge based on puffs. For example, when the total number of puffs (14 puffs*20 times) for the full cartridge is totally 280 puffs, the number of puffs may be reset immediately after the cartridge is replaced, that is, immediately after a new cartridge is mounted, and may accumulate the number of puffs and calculate the remaining amount of the cartridge. The processor 1200 may measure the remaining amount of the cartridge based on capacitance and then compare the calculated remaining amount of the cartridge based on puffs and then, when the difference is large, the processor 1200 may determine that there is no reliability of data and may not output the currently-calculated remaining amount of the cartridge. In this case, optionally, the previously-calculated remaining amount of the cartridge may also be output as it is.

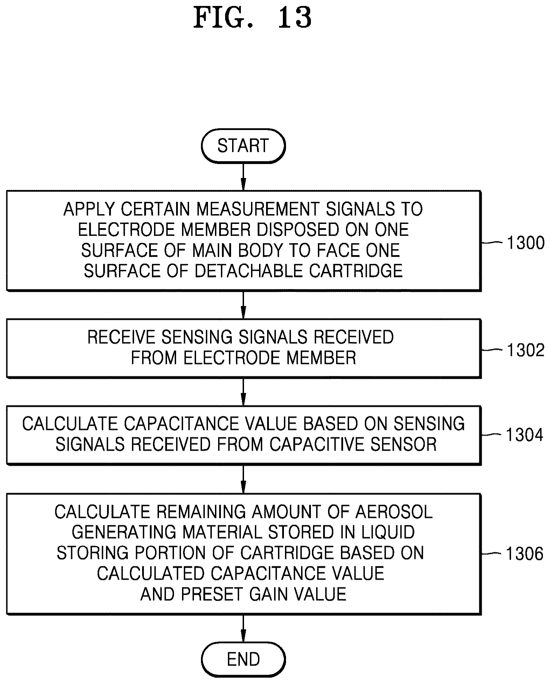

FIG. 13 is a flowchart illustrating a controlling method of an aerosol generating device according to another embodiment. FIG. 13 illustrates a method of performing gain value compensation for a capacitance value measured through an electrode member in the aerosol generating device.

Referring to FIG. 13, in operation 1300, a certain measurement signal may be applied to the electrode member disposed on one surface of a main body to face one surface of the detachable cartridge. In operation 1302, a sensing signal may be received from the electrode member.

In operation 1304, a capacitance value may be calculated based on the sensing signal received from a capacitive sensor.

In operation 1304, the remaining amount of the aerosol generating material stored in the liquid storing portion of the cartridge may be calculated based on the calculated capacitance value and the preset gain value. Here, the preset gain value may be a value stored in the memory for each aerosol generating device through a correction work when the aerosol generating device is manufactured. Here, in an aerosol generating device according to an embodiment, a gain value and an offset value that are set through the above-described correction work may be stored in memory, for example, flash memory of the aerosol generating device. Thus, the gain value or offset value stored in the memory may be different for each aerosol generating device. Instead of determining the remaining amount of the cartridge. based on the same threshold, the remaining amount is determined based on the amount of change with respect to a reference value set in a manufacturing factory for each aerosol generating device by using the gain value or offset value stored for each aerosol generating device, thereby reducing a deviation of the device.

In an embodiment, it may be determined based on a corrected value and may be measured based on a desired level and its resolution. It may be set to a value that considers a hysteresis when interference and water level moves to external objects. For example, when a noise level according to external interference is 200 and hysteresis in each water level are also 200 levels, 800, which is stably twice of a total sum, can be set to be different by level. It should be understood that values of noise levels and hysteresis are exemplary. Also, it should be understood as an exemplary that there is a difference between the level of more than twice the total sum. For example, when 3-stage is measured, there may be a level difference of 1000 in each stage with top: 10500, medium: 9500, and bottom: 8500.

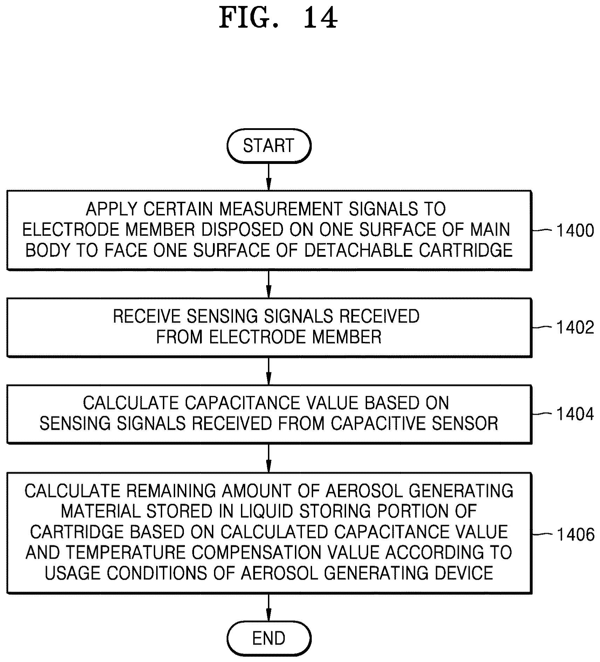

FIG. 14 is a flowchart illustrating a controlling method of an aerosol generating device according to another embodiment. FIG. 14 illustrates a method of performing temperature compensation for a capacitance value measured through an electrode member in the aerosol generating device.

Referring to FIG. 14, in operation 1400, a certain measurement signal may be applied to the electrode member disposed on one surface of a main body to face one surface of the detachable cartridge.

In operation 1402, a sensing signal may be received from the electrode member.

In operation 1404, a capacitance value may be calculated based on the sensing signal received from a capacitive sensor.

In operation 1406, the remaining amount of the aerosol generating material stored in the liquid storing portion of the cartridge may be calculated based on the calculated capacitance value and the temperature compensation value according to the usage conditions of the aerosol generating device. Here, the usage conditions of the aerosol generating device may include during heating or during charging. When the aerosol generating device is heated, heat is transferred from an upper part (i.e., cigarette heater) of the device, and the heater is affected by a very high temperature, for example, at least about 240 degrees, and also cools down relatively quickly after smoking is ended. When the aerosol generating device is charged, heat is transmitted from a lower part of the device (battery mounting position), which is relatively low, for example, about 60 degrees, and heat dissipation caused by internal sealing is weak and it cools down slowly.

Considering the effect of affecting two temperatures in the embodiment, the heating element or the temperature sensor attached to the heating element or heater, such as an RTD and the temperature sensor attached to the battery pack at the time of charging, for example NTC Compensate in combination. The higher the temperature characteristics of the electrode material used to measure the remaining amount of the cartridge, the greater capacitance capacity, the heater temperature and the battery temperature may be subtracted from the measured capacitance value (or the remaining amount of liquid). Here, each of the heater temperature and the battery temperature may be multiplied by proper coefficients that reflect the temperature characteristics.

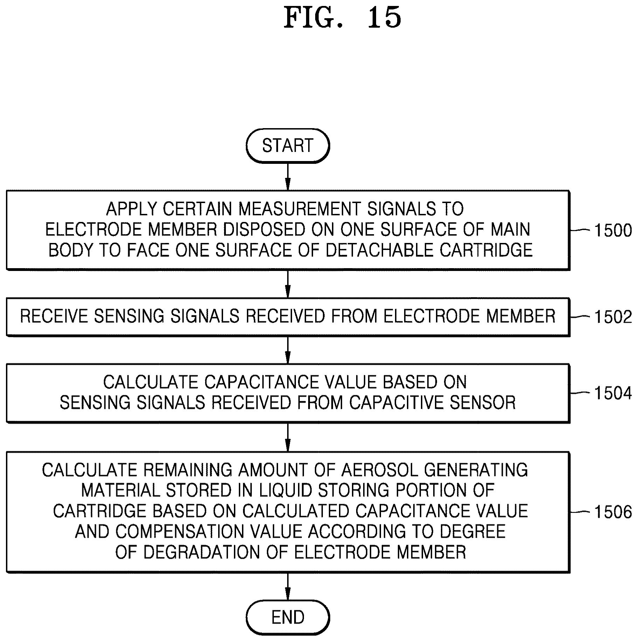

FIG. 15 is a flowchart illustrating a controlling method of an aerosol generating device according to another embodiment. FIG. 15 illustrates a method of performing degradation compensation for a capacitance value measured through an electrode member in the aerosol generating device.

Referring to FIG. 15, in operation 1500, a certain measurement signal may be applied to the electrode member disposed on one surface of a main body to face one surface of the detachable cartridge.

In operation 1502, a sensing signal may be received from the electrode member.

In operation 1504, a capacitance value may be calculated based on the sensing signal received from a capacitive sensor.

In operation 1506, the remaining amount of the aerosol generating material stored in the liquid storing portion of the cartridge may be calculated based on the calculated capacitance value and the compensation value according to the degree of degradation of the electrode member. In an embodiment, compensation according to degradation of the electrode for capacitance measurement may be compensated by using minimum and maximum values that may be measured in the correction process described in 1). Here, the maximum value may be a capacitance value measured when a full cartridge is mounted, and the minimum value may be a capacitance value measured when the empty cartridge is mounted or a cartridge is not mounted.

In an embodiment, when the measured capacitance value after the full cartridge is mounted is greater than the previously-stored maximum value, that is, when the measured capacitance value after the full cartridge is mounted is too higher than the capacitance value in correction, compensation may be performed by subtracting a value as much as the higher value. Here, the level of subtraction may be the ratio of the difference. In addition, optionally, a fixed rate, for example, about 2%, may be selected to subtract the ratio. For example, when the value of the full cartridge at the time of correction is 10500, and if the value of more than 11000 is measured, 220, which is at a level of 2%, may be removed from the measurement value, and may be determined as a capacitance value (or a cartridge value) compensated for 10780. Here, the ratio and specific numbers for degradation compensation have been described as an example, but embodiments are not limited thereto, and a variety of modifications may be made in consideration of the characteristics of an aerosol generating device. On the contrary, when the remaining amount value or capacitance value of the cartridge is lowered, the minimum value in a state where no cartridge is mounted in a correction procedure is stored in advance, so that, when the cartridge is removed from the aerosol generating device, the minimum value may be measured, and when the minimum value is less than the value at the time of correction, reverse correction may be performed.

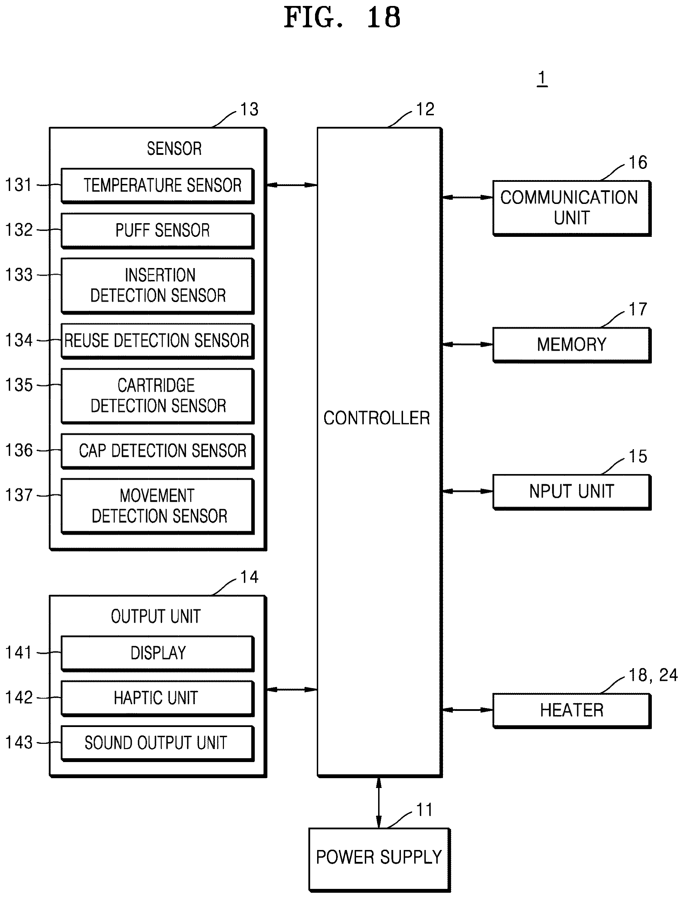

FIG. 18 is a block diagram of an aerosol generating device 1 according to an embodiment.

The aerosol generating device 1 may include a power supply 11, a controller 12, a sensor 13, an output unit 14, an input unit 15, a communication unit 16, memory 17, and at least one heater 18, 24. However, the internal structure of the aerosol generating device 1 is not limited to the illustration of FIG. 18. That is, it may be understood by those skilled in the art that some of the configuration shown in FIG. 18 may be omitted or a new configuration may be added depending on the design of the aerosol generating device 1.

The sensor 13 may detect the state of the aerosol generating device 1 or the state around the aerosol generating device 1 and may transmit the detected information to the controller 12. The controller 12 may control the aerosol generating device 1 so that various functions such as operation control of the cartridge heater 24 and/or the heater 18, smoking restrictions, determining whether a stick S and/or the cartridge 19 is inserted or not, an alarm display, etc. may be performed.

The sensor 13 may include at least one of a temperature sensor 131, a puff sensor 132, an insertion detection sensor 133, a reuse detection sensor 134, a cartridge detection sensor 135, a cap detection sensor 136, and a movement detection sensor 137.

The temperature sensor 131 may detect temperature at which the cartridge heater 24 and/or the heater 18 is heated. The aerosol generating device 1 may include a separate temperature sensor for detecting the temperature of the cartridge heater 24 and/or the heater 18, or the cartridge heater 24 and/or the heater 18 itself may serve as a temperature sensor.

The temperature sensor 131 may output signals corresponding to the temperature of the cartridge heater 24 and/or the heater 18. For example, the temperature sensor 131 may include a resistor element of which resistance value changes according to the temperature change of the cartridge heater 24 and/or the heater 18. The temperature sensor 131 may be implemented by a thermistor, etc. which is an element using a property in which resistance changes according to the temperature. In this case, the temperature sensor 131 may output signals corresponding to the resistance value of the resistor element as signals corresponding to the temperature of the cartridge heater 24 and/or the heater 18. For example, the temperature sensor 131 may include a sensor for detecting the resistance value of the cartridge heater 24 and/or the heater 18. In this case, the temperature sensor 131 may output signals corresponding to the resistance value of the cartridge heater 24 and/or the heater 18 as signals corresponding to the temperature of the cartridge heater 24 and/or the heater 18.

The temperature sensor 131 may be disposed around the power supply 11 to monitor the temperature of the power supply 11. The temperature sensor 131 may be disposed adjacent to the power supply 11. For example, the temperature sensor 131 may be attached to one surface of the battery that is the power supply 11. For example, the temperature sensor 131 may be mounted on one surface of a printed circuit board.

The temperature sensor 131 may be disposed inside the body 10 to detect the internal temperature of the body 10.

The puff sensor 132 may detect the user's puff based on various physical changes of an air current path. The puff sensor 132 may output signals corresponding to puffs. For example, the puff sensor 132 may be a pressure sensor. The puff sensor 132 may output signals corresponding to internal pressure of the aerosol generating device. Here, the internal pressure of the aerosol generating device 1 may correspond to pressure of the air current path on which gas flows. The puff sensor 132 may be disposed to correspond to the air current path on which gas flows, in the aerosol generating device 1.

The insertion detection sensor 133 may detect insertion and/or removal of the stick S. The insertion detection sensor 133 may detect signal changes according to insertion and/or removal of the stick S. The insertion detection sensor 133 may be installed around an insertion space. The insertion detection sensor 133 may detect insertion and/or removal of the stick S according to changes in dielectric constants inside the insertion space. For example, the insertion detection sensor 133 may be an inductive sensor and/or a capacitance sensor.

The inductive sensor may include at least one coil. The coil of the inductive sensor may be disposed adjacent to the insertion space. For example, when a magnetic field changes around a coil through which current flows, the characteristics of the current flowing through the coil may be changed according to the Faraday's law. Here, the characteristics of the current flowing through the coil may include a frequency of an alternating current, a current value, a voltage value, an inductance value, an impedance value, etc.

The inductive sensor may output signals corresponding to the characteristics of the current flowing through the coil. For example, the inductive sensor may output signals corresponding to the inductance value of the coil.

The capacitance sensor may include a conductor. The conductor of the capacitance sensor may be disposed adjacent to the insertion space. The capacitance sensor may output signals corresponding to electromagnetic characteristics of the surrounding, for example, capacitance around the conductor. For example, when the stick S including a metallic wrapper is inserted into the insertion space, the electromagnetic characteristics around the conductor may be changed by the wrapper of the stick S.

The reuse detection sensor 134 may detect whether the stick S is reused or not. The reuse detection sensor 134 may be a color sensor. The color sensor may detect a color of the stick S. The color sensor may detect a color of a part of the wrapper surrounding the outside of the stick S. The color sensor may detect values for optical characteristics corresponding to the color of an object based on light reflected from the object. For example, optical characteristics may be wavelengths of light. The color sensor may be implemented with a proximity sensor and one configuration or with a separate configuration distinguished from the proximity sensor.

A color of at least part of the wrapper that constitutes the stick S may be changed by aerosol. The reuse detection sensor 134 may be disposed to correspond to a position in which at least a part of the wrapper of color is changed by aerosol, in case where the stick S is inserted into the insertion space. For example, before the stick S is used by the user, the color of at least a part of the wrapper may be a first color. In this case, as at least a part of the wrapper is wet by aerosol while aerosol generated by the aerosol generating device 1 passes through the stick S, a color of at least a part of the wrapper may be changed into a second color. The color of at least a part of the wrapper may be maintained as the second color after being changed from the first color to the second color.

The cartridge detection sensor 135 may detect insertion and/or removal of the cartridge 19. The cartridge detection sensor 135 may be implemented by an inductance-based sensor, a capacitive sensor, a resistance sensor, a hall sensor (hall IC) using a hall effect, etc.

The cap detection sensor 136 may detect mounting and/or removal of a cap. When the cap is separated from the body 10, a part of the cartridge 19 and the body 10 covered by the cap may be exposed to the outside. The cap detection sensor 136 may be implemented by a contact sensor, a hall sensor (hall IC), an optical sensor, etc.

The movement detection sensor 137 may detect the movement of the aerosol generating device. The movement detection sensor 137 may be implemented with at least one of an acceleration sensor and a gyro sensor.

The sensor 13 may further include at least one of a humidity sensor, a barometric sensor, a magnetic sensor, a global positioning sensor, and a proximity sensor, in addition to the above-described sensors 131 to 137. Functions of sensors may be intuitively inferred by those skilled in the art from their names and thus, detailed descriptions thereof may be omitted.

The output unit 14 may output information about the state of the aerosol generating device 1 and may provide the information to the user. The output unit 14 may include at least one of a display 141, a haptic unit 142, and a sound output unit 143, but embodiments are not limited thereto. When the display 141 and a touch pad include a touch screen while having a layer structure, the display 141 may be used as an input device in addition to an output device.

The display 141 may provide information about the aerosol generating device 1 visually to the user. For example, the information about the aerosol generating device 1 may mean various information such as the charging/discharging state of the power supply 11 of the aerosol generating device 1, a preheating state of the heater 18, an insertion/removal state of the stick S and/or the cartridge 19, a mounting/removal state of the cap, or a state in which the use of the aerosol generating device 1 is limited (e.g., detecting of an abnormal article), and the display 141 may output the information to the outside. For example, the display 141 may have a shape of a light-emitting diode (LED). For example, the display 141 may be a liquid crystal display (LCD), an organic light-emitting diode (OLED), or the like.

The haptic unit 142 may convert electrical signals into mechanical stimulus or electrical stimulus and may provide the information about the aerosol generating device 1 tactually to the user. For example, the haptic unit 142 may generate vibration corresponding to completion of initial preheating when initial power is supplied to the cartridge heater 24 and/or the heater 18 for a set time. The haptic unit 142 may include a vibration motor, a piezoelectric element, or an electrical stimulus device.

The sound output unit 143 may provide information about the aerosol generating device 1 acoustically to the user. For example, the sound output unit 143 may convert the electrical signals into sound signals and may output the sound signals to the outside.

The power supply 11 may supply power used to operate the aerosol generating device 1. The power supply 11 may supply power so that the cartridge heater 24 and/or the heater 18 may be heated. Also, the power supply 11 may supply power required for operations of the sensor 13, the output unit 14, the input unit 15, the communication unit 16, and the memory 17, which are other configurations provided in the aerosol generating device 1. The power supply 11 may be a chargeable battery or a disposable battery. For example, the power supply 11 may be a lithium polymer (LiPoly) battery, but embodiments are not limited thereto.

Although not shown in FIG. 18, the aerosol generating device 1 may further include a power supply protection circuit. The power supply protection circuit may be electrically connected to the power supply 11 and may include a switching element.

The power supply protection circuit may cut off an electric path for the power supply 11 according to certain conditions. For example, the power supply protection circuit may cut off an electric path for the power supply 11 when a voltage level of the power supply 11 is greater than or equal to a first voltage corresponding to overcharging. For example, the power supply protection circuit may cut off an electric path for the power supply 11 when a voltage level of the power supply 11 is less than a second voltage corresponding to overdischarging.

The heater 18 may heat a medium in the stick S or an aerosol generating material by receiving power from the power supply 11. Although not shown in FIG. 18, the aerosol generating device 1 may further include a power conversion circuit (e.g., a DC/DC converter) for converting power of the power supply 11 to supply power to the cartridge heater 24 and/or the heater 18. Also, when the aerosol generating device 1 generates aerosol by using an induction heating method, the aerosol generating device 1 may further include a DC/AC converter that converts a direct current power of the power supply 11 into an alternating current power.

The controller 12, the sensor 13, the output unit 14, the input unit 15, the communication unit 16, and the memory 17 may perform functions by receiving power from the power supply 11. Although not shown in FIG. 18, the aerosol generating device 1 may further include a power conversion circuit for converting power of the power supply 11 to supply power to components, for example, a low dropout (LDO) circuit or a voltage regulator circuit. Also, although not shown in FIG. 18, a noise filter may be provided between the power supply 11 and the heater 18. The noise filter may be a low pass filter. The low pass filter may include at least one inductor and a capacitor. A cutoff frequency of the low pass filter may correspond to a frequency of a radio frequency switching current applied to the heater 18 from the power supply 11. Radio frequency noise components may be prevented from being applied to the sensor 13 such as the insertion detection sensor 133 by the low pass filter.

In an embodiment, the cartridge heater 24 and/or the heater 18 may be formed of an arbitrary proper electric resistance material. For example, the proper electric resistance material may be metal or metal alloy including titanium, zirconium, tantalum, platinum, nickel, cobalt, chromium, hafnium, niobium, molybdenum, tungsten, tin, gallium, manganese, iron, copper, stainless steel, nichrome, etc., but embodiments are not limited thereto. Also, the heater 18 may be implemented with a metal heating wire, a metal heating plate on which an electric conductive track is disposed, a ceramic heating body, or the like, but embodiments are not limited thereto.

In another embodiment, the heater 18 may be a heater using an induction heating method. For example, the heater 18 may include a susceptor that generates heat by a magnetic field applied by the coil and heats the aerosol generating material.

The input unit 15 may receive information input from the user or may output information to the user. For example, the input unit 15 may be a touch panel. The touch panel may include at least one touch sensor that detects touch. For example, the touch sensor may include a capacitive touch sensor, a resistive touch sensor, a surface acoustic wave touch sensor, an infrared touch sensor, or the like, but embodiments are not limited thereto.

The display 141 and the touch panel may be implemented with one panel. For example, the touch panel may be inserted (on-cell type or in-cell type) into the display 141. For example, the touch panel may be add-on type on the display 141.

The input unit 15 may include a button, a key pad, a dome switch, a jog wheel, a jog switch, or the like, but embodiments are not limited thereto.

The memory 17 may be hardware for storing various data to be processed in the aerosol generating device 1 and may store data processed by the controller 12 and data to be processed. The memory 17 may include at least one type storage medium of flash memory type memory, hard disk type memory, multimedia card micro type memory, card type memory (e.g., SD or XD memory, etc.), random access memory (RAM), static random access memory (SRM), read-only memory (ROM), electrically erasable programmable read-only memory (EEPROM), programmable read-only memory (PROM), magnetic memory, a magnetic disk, and an optical disk. The memory 17 may store data about the operating time of the aerosol generating device 1, a maximum puff number, a current puff number, at least one profile, and a user's smoking pattern.

The communication unit 16 may include at least one component for communication with other electronic devices. For example, the communication unit 16 may include at least one of a short-range wireless communication unit and a wireless communication unit.

The short-range wireless communication unit may include a Bluetooth communication unit, a Bluetooth low energy (BLE) communication unit, a near field communication unit, a WLAN (Wifi) communication unit, a Zigbee communication unit, an infrared data association (IrDA) communication unit, a Wi-Fi direct (WFD) communication unit, an ultra wideband (UWB) communication unit, an Ant+ communication unit, or the like, but embodiments are not limited thereto.

The wireless communication unit may include a cellular network communication unit, an Internet communication unit, a computer network (e.g., LAN or WAN) communication unit, or the like, but embodiments are not limited thereto.

Although not shown in FIG. 18, the aerosol generating device 1 may further include a connection interface such as a universal serial bus (USB) interface, may transmit/receive information while being connected to another external device through a connection interface such as a USB interface or the like, or may charge the power supply 11.

The controller 12 may control the overall operation of the aerosol generating device 1. In an embodiment, the controller 12 may include at least one processor. The processor may be implemented with an array of a plurality of logic gates or may also be implemented with a combination of a general microprocessor and memory having a program executable in the microprocessor stored therein. Also, it may be understood by those skilled in the art that the processor may also be implemented with another type hardware.

The controller 12 may control supplying of power of the power supply 11 to the heater 18, thereby controlling the temperature of the heater 18. The controller 12 may control the temperature of the cartridge heater 24 and/or the heater 18 based on the temperature of the cartridge heater 24 and/or the heater 18 sensed by the temperature sensor 131. The controller 12 may control power supplied to the cartridge heater 24 and/or the heater 18 based on the temperature of the cartridge heater 24 and/or the heater 18. For example, the controller 12 may determine a target temperature of the cartridge heater 24 and/or the heater 18 based on a temperature profile stored in the memory 17.

The aerosol generating device 1 may include a power supply circuit (not shown) electrically connected to the power supply 11 between the power supply 11 and the cartridge heater 24 and/or the heater 18. The power supply circuit may be electrically connected to the cartridge heater 24, the heater 24 or the induction coil 181. The power supply circuit may include at least one switching element. The switching element may be implemented by a bipolar junction transistor (BJT), a field effect transistor (FET), or the like. The controller 12 may control the power supply circuit.

The controller 12 may control switching of the switching element of the power supply circuit, thereby controlling the supply of power. The power supply circuit may be an inverter that converts direct current power output from the power supply 11 into alternating current power. For example, the inverter may include a full-bridge circuit or a half-bridge circuit including a plurality of switching elements.

The controller 12 may turn on the switching element so that power may be supplied to the cartridge heater 24 and/or the heater 18 from the power supply 11. The controller 12 may turn off the switching element so that the supply of power to the cartridge heater 24 and/or the heater 18 may be cut off. The controller 12 may adjust current supplied from the power supply 11 by adjusting a frequency and/or duty ratio of a current pulse input to the switching element.

The controller 12 may control voltage output from the power supply 11 by controlling switching of the switching element of the power supply circuit. The power conversion circuit may convert the voltage output from the power supply 11. For example, the power conversion circuit may include a Buck-converter that drops the voltage output from the power supply 11. For example, the power conversion circuit may be implemented with a Buck-boost converter, a Zener diode, etc.

The controller 12 may adjust the level of the voltage output from the power conversion circuit by controlling an on/off operation of the switching element included in the power conversion circuit. When an on state of the switching element is continued, the level of the voltage output from the power conversion circuit may correspond to the level of the voltage output from the power supply 11. A duty ratio with respect to the on/off operation of the switching element may correspond to a ratio of the voltage output from the power conversion circuit to the voltage output from the power supply 11. As the duty ratio with respect to the on/off operation of the switching element is decreased, the level of the voltage output from the power conversion circuit may be reduced. The heater 18 may be heated based on the voltage output from the power conversion circuit.

The controller 12 may control so that power may be supplied to the heater 18 by using at least one method of a pulse width modulation (PWM) method and a proportional-integral-differential (PID) method.

For example, the controller 12 may control so that a current pulse having a certain frequency and duty ratio by using the PWM method. The controller 12 may control power supplied to the heater 18 by adjusting the frequency and duty ratio of the current pulse.

For example, the controller 12 may determine a target temperature that is a target of control based on the temperature profile. The controller 12 may control power supplied to the heater 18 by using a PID method that is a feedback control method using a difference value between the temperature of the heater 18 and a target temperature, a value obtained by integrating the difference value according to the flow of time, and a value obtained by differentiating the difference value according to the flow of time.

The controller 12 may prevent the cartridge heater 24 and/or the heater 18 from being overheated. For example, the controller 12 may control the operation of the power conversion circuit so that the supply of power to the cartridge heater 24 and/or the heater 18 is stopped, based on the temperature of the cartridge heater 24 and/or the heater 18 that exceeds a preset limit temperature. For example, the controller 12 may reduce the amount of power supplied to the cartridge heater 24 and/or the heater 18, based on the temperature of the cartridge heater 24 and/or the heater 18 that exceeds a preset limit temperature. For example, the controller 12 may determine that the aerosol generating material accommodated in the cartridge 19 is exhausted, based on the temperature of the cartridge heater 24 that exceeds the limit temperature, and may cut off the supply of power to the cartridge heater 24.

The controller 12 may control charging/discharging of the power supply 11. The controller 12 may check the temperature of the power supply 11 based on an output signal of the temperature sensor 131.

When a power wire is connected to a battery terminal of the aerosol generating device 1, the controller 12 may check whether the temperature of the power supply 11 is greater than or equal to a first limit temperature that is a basis for cutting off charging of the power supply 11. The controller 12 may control to charge the power supply 11 based on a preset charging current when the temperature of the power supply 11 is less than the first limit temperature. The controller 12 may cut off charging of the power supply 11 when the temperature of the power supply 11 is greater than or equal to the first limit temperature.

When power of the aerosol generating device 1 is in an on state, the controller 12 may check whether the temperature of the power supply 11 is greater than or equal to a second limit temperature that is a basis for cutting off discharging of the power supply 11. The controller 12 may control to use power stored in the power supply 11 when the temperature of the power supply 11 is less than the second limit temperature. The controller 12 may stop using of power stored in the power supply 11 when the temperature of the power supply 11 is greater than or equal to the second limit temperature.

The controller 12 may calculate the remaining capacity of power stored in the power supply 11. For example, the controller 12 may calculate the remaining capacity of the power supply 11 based on a voltage and/or current sensing value of the power supply 11.

The controller 12 may determine whether the stick S inserted into the insertion space, through the insertion detection sensor 133. The controller 12 may determine that the stick S is inserted, based on the output signal of the insertion detection sensor 133. When it is determined that the stick S is inserted into the insertion space, the controller 12 may control so that power may be supplied to the cartridge heater 24 and/or the heater 18. For example, the controller 12 may supply power to the cartridge heater 24 and/or the heater 18 based on a temperature profile stored in the memory 17.

The controller 12 may determine whether the stick S is removed from the insertion space. For example, the controller 12 may determine whether the stick S inserted into the insertion space, through the insertion detection sensor 133. For example, the controller 12 may determine that the stick S is removed from the insertion space, when the temperature of the heater 18 is greater than or equal to the limit temperature or when a temperature change slope of the heater 18. When it is determined that the stick S is inserted into the insertion space, the controller 12 may control so that power may be supplied to the cartridge heater 24 and/or the heater 18.

The controller 12 may control a power supply time and/or a power supply amount to the heater 18 according to the state of the stick S detected by the sensor 13. The controller 12 may check the level range in which the level of signals of a capacitance sensor is included, based on a lookup table. The controller 12 may check a moisture amount for the stick S according to the checked level range.

When the stick S is overwatering, the controller 12 may control the power supply time for the heater 18, and increase the preheating time of the stick S rather than the general state.

The controller 12 may determine whether the stick S inserted into the insertion space is reused or not, through the reuse detection sensor 134. For example, the controller 12 may compare a sensing value of signals of the reuse detection sensor with a first reference range in which a first color is not included, and may determine that the stick S is not used when the sensing value is included in the first reference range. For example, the controller 12 may compare a sensing value of signals of the reuse detection sensor with a second reference range in which a second color is included, and may determine that the stick S is used when the sensing value is included in the second reference range. When it is determined that the stick S is used, the controller 12 may cut off the supply of power to the cartridge heater 24 and/or the heater 18.

The controller 12 may determine whether the cartridge 19 is attached and/or detached, through the cartridge detection sensor 135. For example, the controller 12 may determine whether the cartridge 19 is attached and/or detached, based on the sensing value of signals of the cartridge detection sensor.

The controller 12 may determine whether the aerosol generating material of the cartridge 19 is exhausted. For example, the controller 12 may preheat the cartridge heater 14 and/or the heater 18 by applying power, may determine whether the temperature of the cartridge heater 24 exceeds the limit temperature in a preheating section, and may determine that the aerosol generating material of the cartridge 19 is exhausted when the temperature of the cartridge heater 24 exceeds the limit temperature. When it is determined that the aerosol generating material is exhausted, the controller 12 may cut off the supply of power to the cartridge heater 24 and/or the heater 18.

The controller 12 may determine whether the cartridge 19 may be used or not. For example, the controller 12 may determine that the use of the cartridge 19 is not possible when a current puff number is greater than or not a maximum puff number set in the cartridge 19, based on data stored in the memory 17. For example, the controller 12 may determine that the use of the cartridge 19 is not possible when a total time at which the heater 24 is heated, is longer than or equal to a preset maximum time or a total amount of power supplied to the heater 24 is greater than or equal to a preset maximum power amount.

The controller 12 may perform determination on the user's smoking through the puff sensor 132. For example, the controller 12 may determine whether puffs occur, based on a sensing value of signals of the puff sensor 132. For example, the controller 12 may determine the intensity of puffs, based on a sensing value of signals of the puff sensor 132. When the puff number reaches the preset maximum puff number or puffs are not sensed for a preset time or more, the controller 12 may cut off the supply of power to the cartridge heater 24 and/or the heater 18.

The controller 12 may determine whether the cap is attached and/or detached, through the cap detection sensor 136. For example, the controller 12 may determine whether the cap is attached and/or detached, based on the sensing value of signals of the cap detection sensor.

The controller 12 may control the output unit14 based on the result sensed by the sensor 13. For example, when the number of puffs counted by the puff sensor 132 reaches a preset number, the controller 12 may notify to the user in advance that the aerosol generating device 1 will be ended soon, through at least one of the display 141, the haptic unit 142, and the sound output unit 143. For example, the controller 12 may notify the user through the output unit14 based on determination that the stick S is not present in the insertion space. For example, the controller 12 may notify the user through the output unit 14 based on determination that the cartridge 19 and/or the cap is not mounted. For example, the controller 12 may transmit information about the temperature of the cartridge heater 24 and/or the heater 18 to the user through the output unit 14.

The controller 12 may store and update the history of an event occurred in the memory 17 based on certain event occurrence. The event may include the insertion detection of the stick S, heating start of the stick S, puff detection, puff end, overheat detection of the cartridge heater 24 and/or the heater 18, detection of overvoltage applied to the cartridge heater 24 and/or the heater 18, heating end of the stick S, the power on/off operation of the aerosol generation device 1, charging start of the power supply 11, detection of overcharging of the power supply 11, and charging end of the power supply 11, which are performed in the aerosol generating device 1. The history of the event may include the date and time of the event, log data corresponding to the event. For example, when a predetermined event is insertion detection of the stick S, the log data corresponding to the event may include data for the sensing value of the insertion sensor 133. For example, when a predetermined event is overheating detection of the cartridge heater 24 and/or the heater 18, the log data corresponding to the event may include data about the temperature of the cartridge heater 24 and/or heater 18, the voltage applied to the cartridge heater 24 and/or the heater 18, and current flowing through the cartridge heater 24 and/or the heater 18.

The controller 12 may control to form a communication link with an external device, such as the user's mobile terminal. By receiving data on authentication from the external device through the communication link, the controller 12 may dismiss the limitation of the use of at least one function of the aerosol generating device 1. Here, the data on authentication may include data that indicates the completion of user authentication for users corresponding to external devices. The user may perform user authentication through an external device. The external device may determine whether the user data is valid based on the user's birthday and the unique number representing the user, and may receive data about the permission of the aerosol generator 1 from the external server. The external device may transmit data indicating the completion of the user authentication by the aerosol generating device 1 based on the data on the permission. When the user authentication is completed, the controller 12 may dismiss the limitation of the use of at least one function of the aerosol generating device 1. For example, when user authentication is completed, the controller 12 may disable the limitation of the use of heating functions that supply power to the heater 18.

The controller 12 may transmit data on the state of the aerosol generating device 1 to the external device through the communication link formed with the external device. Based on the received state data, the external device may output the remaining capacity, an operation mode, etc. of the power supply 11 of the aerosol generating device 1 through the display of the external device based on the received state data.

The external device may transmit position search request to the aerosol generating device 1 based on input to start position search of the aerosol generating device 1. When receiving a position search request from an external device, the controller 12 may control so that at least one of the output device may perform an operation corresponding to position search based on the received position search request. For example, the haptic unit 142 may generate vibration in response to the position search request. For example, in response to the position search request, the display 141 may output an object that corresponds to position search and search end.

The controller 12 may control firmware update by receiving firmware data from the external device. The external device may check the current version of the firmware of the aerosol generating device 1 and determine whether the new version of the firmware is present. The external device may receive a new version of the firmware data and transmit the new version of the firmware data to the aerosol generating device 1 when an input requesting for firmware download is received. As the controller 12 receives the new version of the firmware data, the firmware update of the aerosol generating device 1 may be performed.

The controller 12 may transmit data on the sensing value of at least one sensor 13 through the communication unit 16 to an external server (not shown), and may receive and store a learning model generated by learning sensing values through machine learning such as deep learning from a server. The controller 12 may perform an operation of determining the user's smoking pattern, an operation of generating a temperature profile by using the learning model received from the server. The controller 12 may store sensing value data of at least one sensor 13 and data for learning an artificial neural network (ANN) in the memory 17. For example, the memory 17 may store a database for each configuration provided in the aerosol generating device 1 for learning the artificial neural network (ANN), a weight that forms an ANN structure, bias, etc. The controller 12 may learn data on the sensing value of at least one sensor 13, the user's smoking pattern, the temperature profile, etc. stored in the memory 17, and may generate at least one learning model used for generation of the temperature profile.

Any embodiment or other embodiments of the disclosure described above are not exclusive or distinct from each other. Some embodiments or other embodiments of the disclosure described above may be combined or combined with each configuration or function.

For example, it means that the A configuration described in a specific embodiment and/or the drawings and the B configuration described in another embodiment and/or the drawings may be combined with each other. In other words, even if it is not explained directly about combination between the configurations, it is possible to combine unless it is explained that combination is impossible.

The detailed description of the above should not be interpreted in all aspects and should be considered as exemplary. The scope of the disclosure should be determined by a rational interpretation of the attached claims, and all changes within the equivalent scope of the disclosure are included in the scope of the disclosure.

## Claims

1. An aerosol generating device comprising:

   a detachable cartridge including a liquid storing portion storing an aerosol generating material and a heater configured to evaporate the aerosol generating material;
   a battery supplying power to the heater;
   an electrode member disposed on one surface of a main body to face one surface of the cartridge;
   a capacitive sensor configured to apply a certain measurement signal to the electrode member and to receive a sensing signal from the electrode member; and
   a processor configured to calculate a capacitance value based on the sensing signal received from the capacitive sensor and to calculate a remaining amount of the aerosol generating material stored in the liquid storing portion based on the calculated capacitance value and a temperature compensation value according to a usage condition of the aerosol generating device.

2. The aerosol generating device of claim 1, wherein the processor is further configured to calculate the capacitance value based on charging time and discharging time of the electrode member.

3. The aerosol generating device of claim 1, wherein the temperature compensation value according to the usage condition is a first temperature compensation value according to a heating operation of a cigarette heater that heats an aerosol generating article or a second temperature compensation value according to charging of the battery.

4. The aerosol generating device of claim 3, wherein the processor is further configured to calculate the remaining amount of the aerosol generating material based on a capacitance value obtained by subtracting the first temperature compensation value or the second temperature compensation value from the calculated capacitance value when capacitance of the electrode member has characteristics proportional to a temperature.

5. The aerosol generating device of claim 3, further comprising:

a first temperature sensor configured to measure a temperature of the cigarette heater; and
a second temperature sensor configured to measure a temperature of the battery,
wherein the processor is further configured to calculate the remaining amount of the aerosol generating material based on a capacitance value obtained by subtracting a first temperature value measured by the first temperature sensor and a second temperature value measured by the second temperature sensor from the calculated capacitance value.

6. The aerosol generating device of claim 5, wherein

a first coefficient multiplied by the first temperature value, a second coefficient multiplied by the second temperature value are provided,
the first coefficient reflects a temperature change of the cigarette heater, the second coefficient reflects a temperature change of the battery, and the first coefficient is less than the second coefficient.

7. The aerosol generating device of claim 1, wherein the processor is further configured to set a difference of a preset value between levels of the remaining amount of the aerosol generating material by reflecting noise due to external interference and a hysteresis effect according to a change in a liquid level of the liquid storing portion.

8. The aerosol generating device of claim 1, further comprising:

a puff sensor configured to detect inhalation of the vaporized aerosol,
wherein the processor is further configured to count a number of puffs detected by the puff sensor and calculate a puff-based remaining amount corresponding to a cumulative sum of the counted puffs.

9. The aerosol generating device of claim 8, wherein the processor is further configured to compare the calculated remaining amount of the aerosol generating material with the puff-based remaining amount, and not to output the calculated remaining amount of the aerosol generating material when a difference between the calculated remaining amount and the puff-based remaining amount is greater than a threshold.

10. The aerosol generating device of claim 1, further comprising a display configured to output an icon corresponding to the remaining amount of the aerosol generating material,
wherein the processor is further configured to calculate the remaining amount of the aerosol generating material when the cartridge is mounted on the main body, and to control an icon corresponding to the calculated remaining amount to be output on the display.

11. The aerosol generating device of claim 10, wherein the display is configured to output the remaining amount of the aerosol generating material as at least four icons corresponding to a lot/medium/little/none.

12. The aerosol generating device of claim 1, wherein the electrode member has an area corresponding to an area of the liquid storing portion of the cartridge.

13. The aerosol generating device of claim 1, wherein the electrode member is separated from the liquid storing portion of the cartridge by 0.55 mm to 1.55 mm.

14. The aerosol generating device of claim 1, wherein the electrode member and the capacitive sensor are connected to each other via a connector including a C-clip.

15. A method of controlling an aerosol generating device, the method comprising:

applying a certain measurement signal to an electrode member disposed on one surface of a main body to face one surface of the cartridge;
receiving a sensing signal from the electrode member;
calculating a capacitance value based on the sensing signal received from the capacitive sensor; and
calculating a remaining amount of an aerosol generating material stored in a liquid storing portion of the cartridge based on the calculated capacitance value and a temperature compensation value according to a usage condition of the aerosol generating device.

# FIG. 1

# FIG. 2

# FIG. 3

A100

S

A33

A34

A35

A30

A31

A3

z

y

x

# FIG. 4

EP 4 699 464 A2

# FIG. 5

A142    A13                                    A441

                                               A41
                                               A40
A11                                            AC1

A10                                            A443

                        A442  A422             A46
                                               A45
                        A12                     AC2
                                               A42
A143                    A24                    A421
A141              A21 A25                       A47

              A51 A20
                        A252
                        A251
A1

A80 A50 A53 A97    A10 } A2
                   A20 }    A3
                        A1 }

z   y
x

28

# FIG. 6

# FIG. 7

# FIG. 8

# FIG. 9

# FIG. 10

# FIG. 11A

# FIG. 11B

# FIG. 11C

1120

1110

d

# FIG. 12A

# FIG. 12B

1200

1202 — CAPACITANCE VALUE CALCULATOR

1203 — GAIN VALUE CALCULATOR

1204 — REMAINING AMOUNT CALCULATOR

1205 — TEMPERATURE COMPENSATOR

1206 — DEGRADATION COMPENSATOR

MEMORY — 1250

TEMPERATURE SENSOR — 1260

CAPACITANCE VALUE CALCULATOR — 1270

DISPLAY — 1280

# FIG. 13

```
           ( START )
               │
               ▼
┌─────────────────────────────────┐
│  APPLY CERTAIN MEASUREMENT      │
│  SIGNALS TO ELECTRODE MEMBER    │
│  DISPOSED ON ONE SURFACE OF     │── 1300
│  MAIN BODY TO FACE ONE          │
│  SURFACE OF DETACHABLE          │
│  CARTRIDGE                      │
└─────────────────────────────────┘
               │
               ▼
┌─────────────────────────────────┐
│  RECEIVE SENSING SIGNALS        │
│  RECEIVED                       │── 1302
│  FROM ELECTRODE MEMBER          │
└─────────────────────────────────┘
               │
               ▼
┌─────────────────────────────────┐
│  CALCULATE CAPACITANCE VALUE    │
│  BASED ON SENSING SIGNALS       │── 1304
│  RECEIVED FROM CAPACITIVE       │
│  SENSOR                         │
└─────────────────────────────────┘
               │
               ▼
┌─────────────────────────────────┐
│  CALCULATE REMAINING AMOUNT     │
│  OF AEROSOL GENERATING          │
│  MATERIAL STORED IN LIQUID      │
│  STORING PORTION OF CARTRIDGE   │── 1306
│  BASED ON CALCULATED            │
│  CAPACITANCE VALUE              │
│  AND PRESET GAIN VALUE          │
└─────────────────────────────────┘
               │
               ▼
           ( END )
```

# FIG. 14

START

APPLY CERTAIN MEASUREMENT SIGNALS TO ELECTRODE MEMBER DISPOSED ON ONE SURFACE OF MAIN BODY TO FACE ONE SURFACE OF DETACHABLE CARTRIDGE — 1400

RECEIVE SENSING SIGNALS RECEIVED FROM ELECTRODE MEMBER — 1402

CALCULATE CAPACITANCE VALUE BASED ON SENSING SIGNALS RECEIVED FROM CAPACITIVE SENSOR — 1404

CALCULATE REMAINING AMOUNT OF AEROSOL GENERATING MATERIAL STORED IN LIQUID STORING PORTION OF CARTRIDGE BASED ON CALCULATED CAPACITANCE VALUE AND TEMPERATURE COMPENSATION VALUE ACCORDING TO USAGE CONDITIONS OF AEROSOL GENERATING DEVICE — 1406

END

# FIG. 15

START

APPLY CERTAIN MEASUREMENT SIGNALS TO
ELECTRODE MEMBER DISPOSED ON ONE SURFACE OF MAIN
BODY TO FACE ONE SURFACE OF DETACHABLE CARTRIDGE — 1500

RECEIVE SENSING SIGNALS RECEIVED FROM ELECTRODE MEMBER — 1502

CALCULATE CAPACITANCE VALUE BASED ON
SENSING SIGNALS RECEIVED FROM CAPACITIVE SENSOR — 1504

CALCULATE REMAINING AMOUNT OF AEROSOL GENERATING
MATERIAL STORED IN LIQUID STORING PORTION OF
CARTRIDGE BASED ON CALCULATED CAPACITANCE VALUE — 1506
AND COMPENSATION VALUE ACCORDING TO DEGREE
OF DEGRADATION OF ELECTRODE MEMBER

END

# FIG. 16

1610    1620          1610    1621          1610    1622          1610    1623

# FIG. 17

1700

1710 — | TOP | 1720 — | MEDIUM | 1730 — | BOTTOM | 1740 — | NONE |

# FIG. 18